# FASCICULE DE BREVET EUROPEEN

(11) **EP 3 113 925 B1**
(45) Date de publication et mention de la délivrance du brevet: **06.06.2018**
(21) Numéro de dépôt: 15704344.9
(22) Date de dépôt: 19.01.2015
(51) Int. Cl.: B29C 45/40, B29C 45/06, B29B 11/08

(54) **UNITÉ DE MOULAGE DE PRÉFORMES ÉQUIPÉE D'UN PORTE-NOYAUX MOBILE EN ROTATION**
MIT EINEM DREHBAREN KERNHALTER AUSGESTATTETE VORFORMFORMUNGSEINHEIT
PREFORM MOULDING UNIT EQUIPPED WITH A ROTATABLE CORE HOLDER

(30) Priorité: 03.03.2014 FR 1451696
(43) Date de publication de la demande: 11.01.2017
(73) Titulaire: Sidel Participations, 76930 Octeville-sur-Mer (FR)
(72) Inventeur: DUCLOS, Yves-Alban, F-76930 Octeville sur Mer (FR); HELIX, Gilles, F-76930 Octeville sur Mer (FR); NORTURE, Michel, F-76930 Octeville sur Mer (FR)
(74) Mandataire: Grassin d'Alphonse, Emmanuel Jean Marie
(86) Numéro de dépôt international: PCT/FR2015/050124
(87) Numéro de publication internationale: WO 2015/132487

(56) Documents cités:
- WO-A2-2014/111902
- US-A- 4 470 796
- US-A1- 2007 018 355

## Description

L'invention a trait au domaine du moulage de préformes en matière plastique destinées à la fabrication de récipients (notamment de bouteilles) par soufflage ou étirage soufflage.

Une telle préforme comprend généralement un corps de forme cylindrique, et un col dans le prolongement du corps à une extrémité supérieure de celui-ci. A une extrémité inférieure opposée, le corps est fermé par un fond en forme de dôme.

Une préforme de ce type est classiquement obtenue par injection d'une matière plastique (telle que le PET) dans un moule à l'empreinte de la préforme. La matière plastique, initialement déversée sous forme de granulés solides dans une trémie, est délivrée sous forme de pâte chaude par une vis d'injection à une machine de moulage équipée d'une pluralité de moules dans lesquels la matière plastique pâteuse est injectée. Ordinairement, chaque moule comprend un corps de moule à l'empreinte d'une face externe du corps de la préforme, et un noyau oblong à l'empreinte d'une face interne du corps de la préforme.

Pour former la préforme, la matière est injectée entre le corps de moule et le noyau, lequel est ensuite retiré pour permettre l'éjection de la préforme.

Cette technique est décrite dans la demande de brevet européen EP 2 585 273 (SIPA), qui décrit une machine de moulage équipée d'une pluralité d'unités individuelles montées sur un carrousel et chacune destinée à assurer le moulage d'une préforme. Il est indiqué dans ce document que la machine est destinée à équiper une ligne de production intégrée (ou combinée), dans laquelle les récipients sont directement formés à partir des préformes à peine moulées, et non à partir de préformes moulées au préalable et temporairement stockées.

Le principal inconvénient de cette machine est son faible ratio cadence / nombre de moules. Comme le montre en effet la figure 5 de la demande EP 2 585 273, il est nécessaire, pour assurer le débit requis par la fabrication des récipients (plusieurs dizaines de milliers par heure, 50 000 étant un standard), de monter une multitude d'unités individuelles de moulage sur un même carrousel alimenté par une source commune de matière. Il en résulte un surdimensionnement du carrousel, alors même que les contraintes de cadence imposent de le faire tourner à grande vitesse. Le brevet US 2007/018355 A1 décrit aussi une machine de moulage équipée d'une pluralité d'unités individuelles montées sur un carrousel, chacune étant destinée à assurer le moulage d'une préforme.

Un joint tournant assure la distribution de la matière depuis la source de matière vers chaque unité de moulage mais, compte tenu du grand nombre d'unités de moulage, ce joint tournant est de réalisation complexe et de maintenance délicate.

Un premier objectif est de proposer une unité de moulage permettant d'augmenter les débits de production des préformes tout en limitant le nombre de pièces et l'encombrement.

Un deuxième objectif est de proposer une machine de moulage qui puisse facilement être intégrée à une ligne de fabrication de récipients.

A cet effet, il est proposé, en premier lieu, une unité de moulage de préformes en matière plastique, chaque préforme ayant un corps et un col dans le prolongement du corps, cette unité comprenant :
- un bâti,
- un porte-moule solidaire du bâti et portant au moins un corps de moule à l'empreinte d'une face externe du corps de la préforme, ce corps de moule s'étendant autour d'un axe de moulage ;
- un équipage mobile incluant un chariot et au moins un noyau oblong à l'empreinte d'une face interne du corps de la préforme, le chariot étant monté déplaçable par rapport au bâti entre :
   o une position de moulage dans laquelle le noyau est logé dans le corps de moule, et
   o une position de démoulage dans laquelle le noyau est écarté axialement du corps de moule,
   cet équipage mobile comprenant en outre un porte-noyaux monté sur le chariot, ce porte-noyaux portant au moins un noyau primaire et un noyau secondaire et étant mobile en rotation par rapport au chariot, en position de démoulage de celui-ci, autour d'un axe de rotation parallèle à l'axe de moulage, entre :
   ∘ une première position d'alignement dans laquelle le noyau primaire s'étend dans l'alignement du corps de moule tandis que le noyau secondaire est désaxé par rapport au corps de moule, et
   ∘ une deuxième position d'alignement dans laquelle le noyau primaire et le noyau secondaire sont permutés.

Cette unité de moulage permet par conséquent de mutualiser une partie de l'équipement pour la formation des préformes. Plus précisément, un même corps de moule est commun à deux noyaux, ce qui permet, à production égale, de diminuer le nombre d'unités de moulage d'un facteur d'au moins 30%, au bénéfice de la productivité.

Diverses caractéristiques supplémentaires sont prévues, seules ou en combinaison :
- l'unité de moulage comprend un dispositif d'étayage incluant une butée montée mobile entre une position active dans laquelle la butée est en appui contre le porte-noyaux à l'aplomb du porte-moule, et une position inactive dans laquelle la butée est écartée du porte-noyaux ;
- le chariot est monté en translation par rapport au bâti ;
- le porte-moule inclut une pluralité de corps de moules, et le porte-noyaux porte une pluralité de noyaux primaires et une pluralité de noyaux secondaires ;
- le porte-moule porte une rangée de corps de moules ;
- les corps de moules sont disposés côte à côte le long d'une ligne courbe ;
- l'unité de moulage comprend une paire de tiroirs portant chacun au moins une demi-bague de col ayant une face interne à l'empreinte du col d'une préforme et une face externe tronconique, chaque tiroir étant mobile par rapport au porte-moule entre une position de moulage dans laquelle la ou chaque demi-bague est logée dans une réserve tronconique formée en saillie sur le corps de moule, et une position de démoulage dans laquelle la ou chaque demi-bague est écartée de la réserve tronconique ;
- chaque tiroir est monté en translation par rapport au porte-moule sur un axe de guidage incliné par rapport à l'axe de moulage ;
- l'unité de moulage comprend, pour chaque tiroir, un ressort de rappel monté parallèlement à l'axe de guidage et qui sollicite le tiroir vers sa position de démoulage, chaque tiroir porte un galet, et le porte-noyaux porte un élément d'appui qui, lors du déplacement du porte-noyaux vers sa position de moulage, vient, par application contre le galet, repousser le tiroir vers sa position de moulage à l'encontre du ressort de rappel ;
- l'unité de moulage comprend un dispositif de dévêtissement de chaque préforme moulée, en position de démoulage du porte-noyaux;
- ce dispositif de dévêtissement comprend :
   - un extracteur muni d'un poussoir monté en translation sur chaque noyau, cet extracteur étant mobile en translation par rapport à chaque noyau entre une position de repos et une position d'extraction,
   - un pion monté en translation par rapport au porte-noyaux, entre une position de repos dans laquelle le pion est écarté de l'extracteur et permet à celui-ci d'adopter sa position de repos, et une position d'extraction dans laquelle le pion est en appui contre l'extracteur et place celui-ci dans sa position d'extraction pour désolidariser la préforme moulée du noyau.
- l'unité de moulage comprend un dispositif de préhension des préformes moulées extraites du porte-noyaux, ce dispositif de préhension comprenant un premier peigne portant au moins une première mâchoire et un deuxième peigne portant au moins une deuxième mâchoire définissant, avec la première mâchoire, une pince de préhension d'une préforme, les peignes étant montés mobiles l'un par rapport à l'autre entre une position de préhension dans laquelle les mâchoires sont rapprochées, et une position de libération dans laquelle les mâchoires sont écartées ;
- le dispositif de préhension comprend un ressort de rappel qui sollicite les peignes vers la position de préhension, le porte-moule porte une paire de chemins de cames, et chaque peigne porte un suiveur de came qui coopère avec un chemin de came dont une section rétrécie place les peignes dans leur position de libération à l'encontre du ressort de rappel.

Il est proposé, en second lieu, une machine de moulage de préformes en matière plastique, qui comprend :
- un carrousel tournant,
- une pluralité d'unités de moulage telles que celle présentée ci-dessus, montées sur le carrousel,
- une extrudeuse,
- un joint tournant muni d'une entrée reliée à l'extrudeuse, et d'une pluralité de sorties reliées chacune à une unité de moulage par un conduit d'alimentation pour y délivrer la matière plastique.

Selon un mode particulier de réalisation, cette machine comprend en outre un dispositif d'injection dosimétrique de la matière en provenance de l'extrudeuse, ce dispositif d'injection dosimétrique comprenant une vanne à trois voies interposée sur le conduit d'alimentation, un cylindre de dosage, un plongeur monté en translation dans le cylindre de dosage, un vérin de commande de la translation du plongeur, et un vérin de commande de la position de la vanne.

D'autres objets et avantages de l'invention apparaîtront à la lumière de la description d'un mode de réalisation, faite ci-après en référence aux dessins annexés dans lesquels :
- la figure 1 est une vue en perspective montrant une machine de moulage de préformes en matière plastique, munie d'un carrousel sur lequel sont montées une pluralité d'unités de moulage des préformes avec, en médaillons, des détails de la machine : à gauche, un joint tournant assurant la distribution de la matière ; à droite, un dispositif d'injection dosimétrique assurant l'injection d'une dose prédéterminée de matière dans chaque moule ;
- la figure 2 est une vue en perspective montrant une unité de moulage équipant la machine de la figure 1, dans une position de préparation au moulage d'une rangée interne de préformes avec, en médaillon, un détail, suivant un autre angle de vue, centré sur un système de verrouillage ;
- la figure 3 est une vue en perspective montrant le porte-moules de l'unité de la figure 2 ;
- la figure 4 est une vue de côté du porte-moule de la figure 3 ;
- la figure 5 est une vue de détail de la figure 4, selon l'encart V ;
- la figure 6 est une vue de détail de la figure 4, selon l'encart VI ;
- la figure 7 est une vue de détail en perspective de l'unité de moulage de la figure 2 ;
- la figure 8 est une vue en coupe transversale de l'unité de moulage de la figure 2 ;
- la figure 9 est une vue de détail en coupe du porte-moule de la figure 3 ;
- la figure 10 est une vue de détail en coupe transversale, dans un autre plan de coupe que celui de la figure 8, de l'unité de moulage de la figure 2, et illustrant un système de commande de la rotation du porte-noyaux ;
- la figure 11 est un médaillon de détail de la figure 10, selon l'encart XI ;
- la figure 12 est une vue de détail en coupe de l'unité de moulage de la figure 2, montrant un système d'injection de la matière ;
- la figure 13 est une vue similaire à la figure 2, montrant l'unité de moulage en cours de descente du chariot vers une position de moulage ;
- la figure 14 est une vue similaire à la figure 13, montrant l'unité de moulage en position de moulage ;
- la figure 15 est une vue similaire à la figure 3, montrant le porte-moule de l'unité de moulage dans la position de moulage de la figure 14 ;
- la figure 16 est une vue en coupe transversale similaire à la figure 8, montrant l'unité de moulage dans la position de moulage de la figure 14 ;
- la figure 17 est une vue similaire à la figure 14, illustrant le dévêtissement des préformes ayant été moulées au cycle de moulage précédent et leur prise en charge par de pinces mobiles ;
- la figure 18 est une vue en coupe transversale similaire à la figure 16, montrant l'unité de moulage dans la position de la figure 17 et illustrant le moulage des préformes ;
- les figures 19 et 20 sont des vues en coupe de détail prises sur la figure 18 et illustrant le moulage d'une préforme ;
- la figure 21 est une vue de détail en coupe similaire à la figure 10, illustrant à la fois, à gauche, le dispositif d'étayage coopérant avec le porte-moule, et, à droite, le système de dévêtissement des préformes moulées ;
- la figure 22 est une vue de côté similaire à la figure 4, montrant le porte-moule de l'unité de moulage dans la position de la figure 17 ;
- la figure 23 est une vue de détail du porte-moule de la figure 22, selon l'encart XXIII ;
- la figure 24 est une vue de détail du bloc porte-moule de la figure 22, selon l'encart XXIV ;
- la figure 25 est une vue similaire à la figure 14, montrant l'unité de moulage en position de démoulage ;
- la figure 26 est une vue similaire à la figure 15, illustrant le porte-moule de l'unité de moulage dans la position de démoulage de la figure 25 ;
- la figure 27 est une vue similaire à la figure 26, montrant l'unité de moulage en fin de cycle, dans une configuration similaire à la figure 2 mais après rotation du porte-noyaux et permutation des noyaux;
- la figure 28 est une vue en perspective, par-dessous, du dispositif d'injection dosimétrique montré dans le médaillon de détail à droite sur la figure 1, dans une position préalable au prélèvement d'une dose de matière en provenance de l'extrudeuse ;
- la figure 29 est une vue coupe du dispositif d'injection dosimétrique de la figure 28 ;
- la figure 30 est une vue en coupe similaire à la figure 29, montrant le dispositif d'injection dans une position de fin de prélèvement d'une dose de matière en provenance de l'extrudeuse ;
- la figure 31 est une vue similaire à la figure 28, montrant le dispositif d'injection dans une position d'injection de la dose vers l'unité de moulage ;
- la figure 32 est une vue en coupe similaire aux figures 29 et 30, montrant le dispositif d'injection dans une position d'injection de la dose vers l'unité de moulage ;
- la figure 33 est une vue similaire aux figures 28 et 31, montrant le dispositif d'injection dans une position de fin d'injection de la dose vers l'unité de moulage ;
- la figure 34 est une vue en coupe similaire aux figures 29, 30 et 32, montrant le dispositif d'injection dans une position de fin d'injection de la dose vers l'unité de moulage.

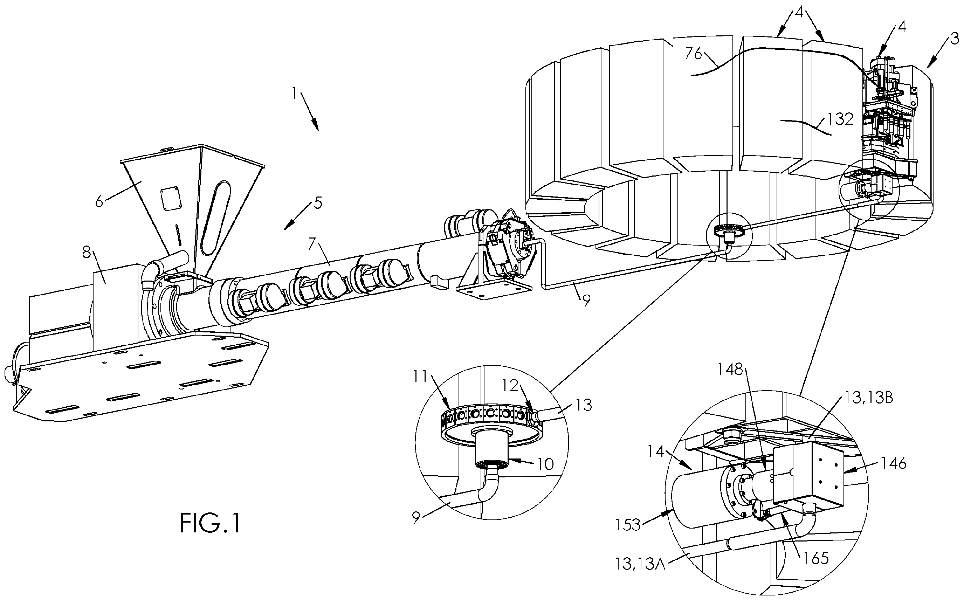

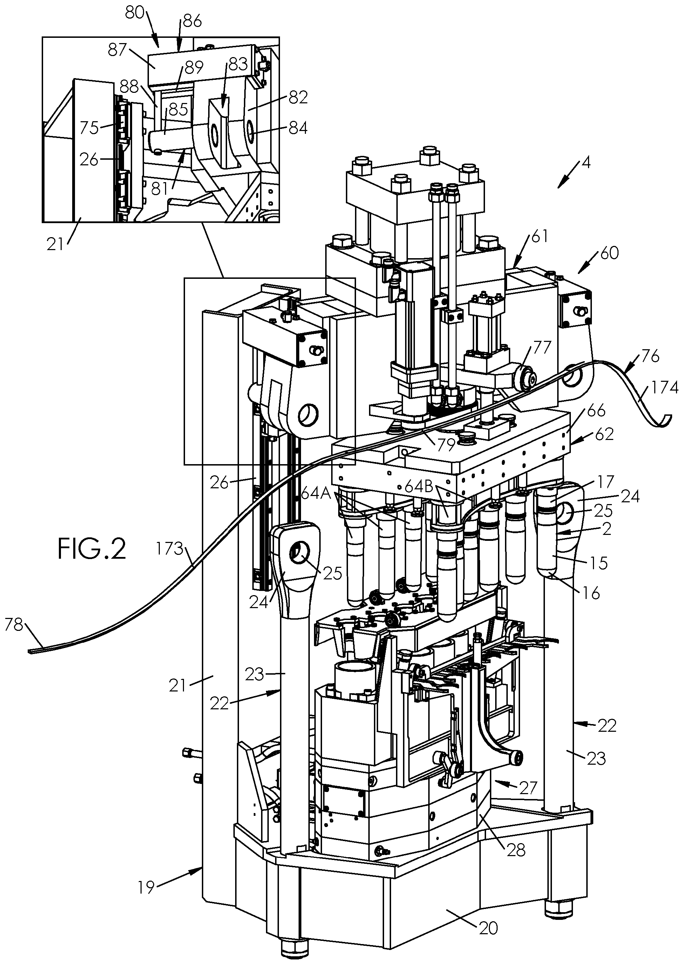

Sur la figure 1 est représentée une machine **1** de moulage de préformes de récipients (notamment de bouteilles) à partir de préformes **2** (visibles notamment sur la figure 2) en matière plastique telle que polyéthylène téréphtalate (PET). Cette machine **1** comprend, en premier lieu, un carrousel **3** tournant (dont on n'a pas représenté la structure porteuse), et une pluralité d'unités **4** de moulage des préformes **2,** toutes identiques, montées côte à côte sur le carrousel **3** et entraînées en rotation avec celui-ci.

La machine **1** comprend, en deuxième lieu, une extrudeuse **5** agencée pour fournir en continu la matière plastique aux unités **4** de moulage. Cette extrudeuse **5** comprend une trémie **6,** dans laquelle la matière plastique est déversée sous forme de granulés solides, et un cylindre **7** dans lequel est montée une vis d'extrusion sans fin mue en rotation par un moteur **8.**

La trémie **6** débouche dans le cylindre **7** à une extrémité amont de celui-ci. A une extrémité aval opposée, le cylindre **7** débouche dans un conduit **9** de raccordement de l'extrudeuse **5** à une entrée **10** d'un joint **11** tournant, qui assure la distribution de la matière issue de l'extrudeuse **5** vers toutes les unités **4** de moulage. A cet effet, le joint **11** est muni d'une série de sorties **12** périphériques en nombre égal aux unités **4** de moulage. Sur chacune de ces sorties **12** est branché un conduit **13** d'alimentation qui raccorde le joint **11,** via un dispositif **14** d'injection dosimétrique qui sera décrit ci-après, à une unité **4** de moulage pour y délivrer la matière plastique en provenance de l'extrudeuse **5.**

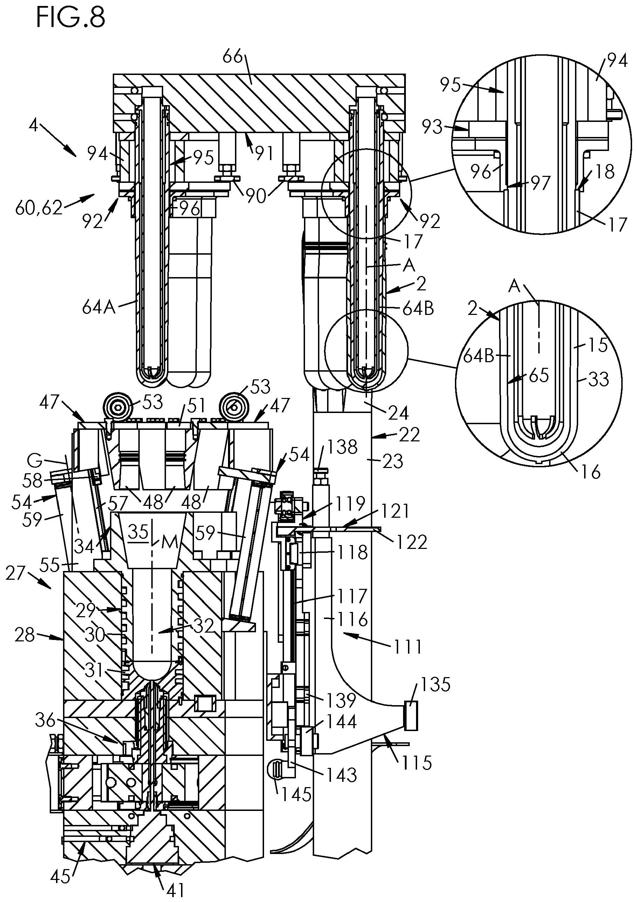

Chaque préforme **2** comprend un corps **15** sensiblement cylindrique de révolution autour d'un axe **A,** fermé par un dôme **16** hémisphérique, et un col **17** ouvert dans le prolongement du corps **15** à l'opposé du dôme **16.** Le col **17** se termine, à l'opposé du corps **15,** par une face **18** annulaire (visible dans le médaillon de détail, en haut à droite sur la figure 8) définissant un buvant pour le récipient qui sera formé à partir de la préforme **2.**

Chaque unité **4** de moulage de préformes **2** comprend, en premier lieu, un bâti **19** par lequel l'unité **4** de moulage est montée sur la structure porteuse du carrousel **3.** Comme illustré sur la figure 2, le bâti **19** comprend un socle **20** qui s'étend sensiblement horizontalement (en position normale de fonctionnement de l'unité **4** de moulage), et une potence **21** solidaire du socle **20** et qui s'étend verticalement en saillie à partir de celui-ci (cf. notamment figure 2).

Le bâti **19** comprend par ailleurs une paire de colonnes **22** de verrouillage cylindriques, également solidaires du socle **20** et qui s'étendent verticalement en saillie à partir de celui-ci. Chaque colonne **22** comprend un corps **23** cylindrique et, à une extrémité supérieure de celui-ci, opposée au socle **20,** une tête **24** aplatie percée d'un trou **25** traversant (figure 2).

Le bâti **19** comprend en outre une paire de rails **26** de guidage solidaires de la potence **21** et qui s'étendent verticalement à partir d'une extrémité supérieure de celle-ci (figure 2).

L'unité **4** de moulage comprend, en deuxième lieu, un porte-moule **27** incluant un bloc **28** porte-moule solidaire du bâti **19** en étant fixé sur le socle **20** (par exemple par vissage) entre les colonnes **22.**

Le bloc **28** porte-moule intègre au moins un corps **29** de moule (visible en coupe sur la figure 8) ayant une paroi **30** latérale cylindrique et un fond **31** de moule hémisphérique superposés qui définissent ensemble une cavité **32** à l'empreinte d'une face externe **33** du corps **15** de la préforme **2.**

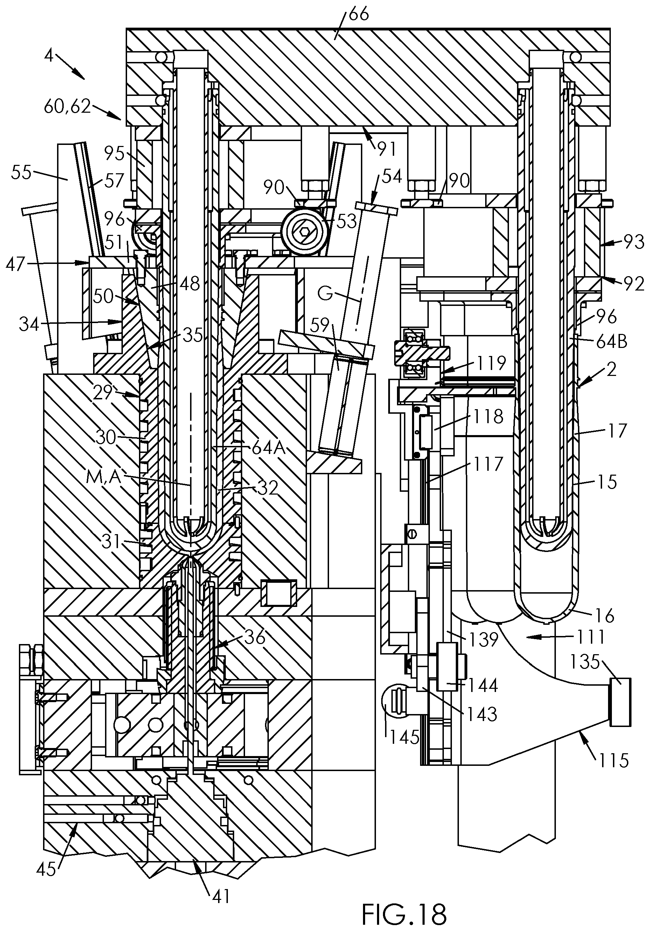

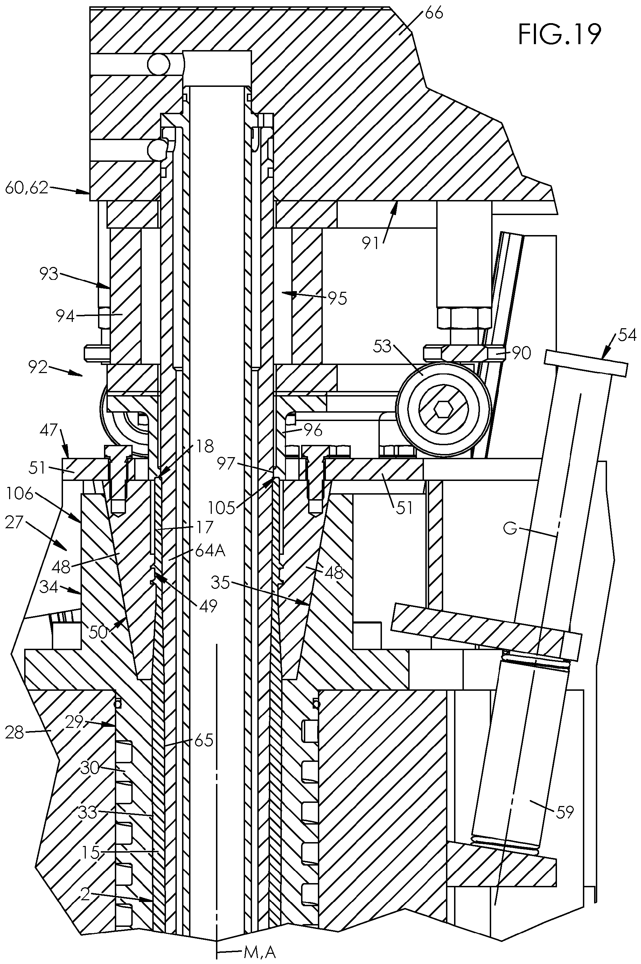

Le corps **29** de moule s'étend autour d'un axe **M** de moulage qui correspond à l'axe **A** central de la préforme **2** à former (voir notamment figures 18 et 19).

Comme on le voit bien sur la figure 8, la paroi **30** latérale se prolonge, à l'opposé du fond **31** de moule, par une section **34** supérieure en saillie définissant une réserve **35** tronconique dans le prolongement axial de la cavité.

Selon un mode de réalisation préféré, le bloc **28** porte-moule intègre plusieurs corps **29** de moules, en l'occurrence au nombre de six. Les corps **29** de moules sont disposés côte à côte, de préférence suivant une ligne courbe, tel qu'un arc de cercle dont le rayon correspond au rayon du carrousel **3.**

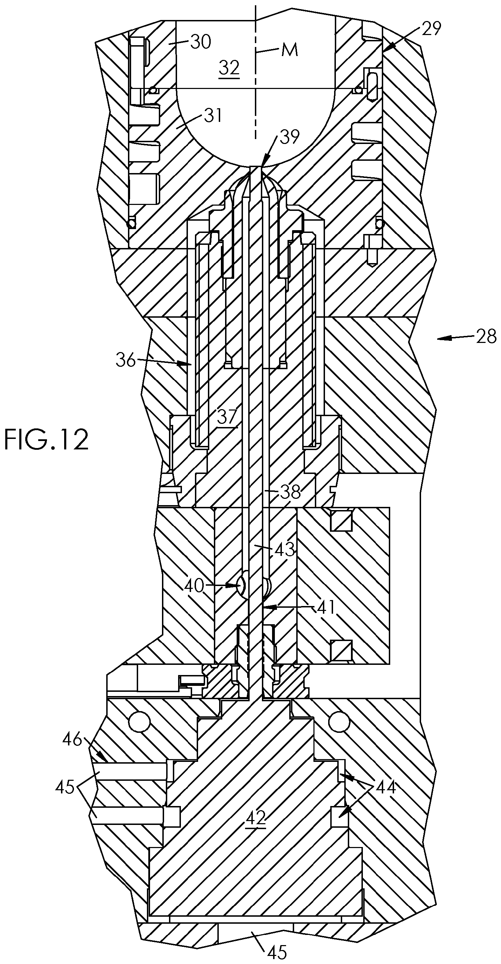

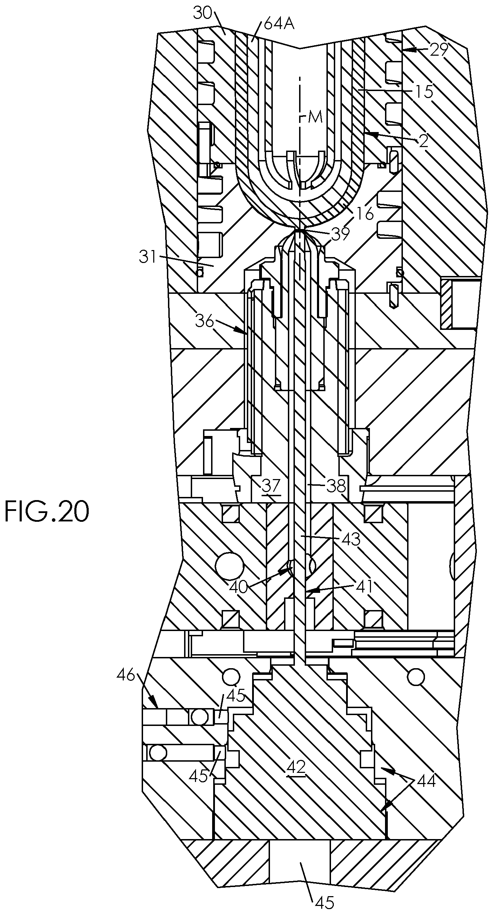

Le bloc **28** porte-moule intègre par ailleurs un système **36** d'injection de la matière dans chaque corps **29** de moule. Ce système **36** d'injection (bien visible sur les figures 12 et 20) comprend, pour chaque corps **29** de moule, un corps **37** fixe, définissant un canal **38** d'injection débouchant dans la cavité **32** par un trou **39** percé dans le fond **31** de moule. Le canal **38** d'injection est relié au dispositif **14** d'injection dosimétrique par un circuit **40** de distribution intégré au bloc **28** porte-moule. Le système **36** d'injection comprend également un injecteur **41** incluant un piston **42** monté en translation axiale par rapport au corps **37,** et une aiguille **43** solidaire du piston **42** et qui s'étend axialement à partir d'une face supérieure de celui-ci, au travers du canal **38** d'injection et jusqu'au fond **31** de moule.

Le piston **42** est monté en translation axiale par rapport au corps **37,** dans une chambre **44** définie par celui-ci, entre une position d'obturation (illustrée sur la figure 12) dans laquelle une extrémité libre de l'aiguille **43** obture le trou **39** et bloque ainsi l'injection de la matière dans la cavité **32,** et une position d'injection (figure 20) dans laquelle l'extrémité libre de l'aiguille **43** est écartée du trou **39** vers le bas, ce qui met en communication le canal **38** d'injection avec la cavité **32.**

A cet effet, l'unité **4** de moulage comprend un circuit **45** de commande du déplacement de l'injecteur. Ce circuit **45** de commande est par exemple pneumatique (ou hydraulique), et comprend des conduits **46** d'alimentation de la chambre **44** en fluide pour mouvoir alternativement le piston **42** de sa position d'obturation vers sa position d'injection, et réciproquement, à la manière d'un vérin pneumatique (ou hydraulique).

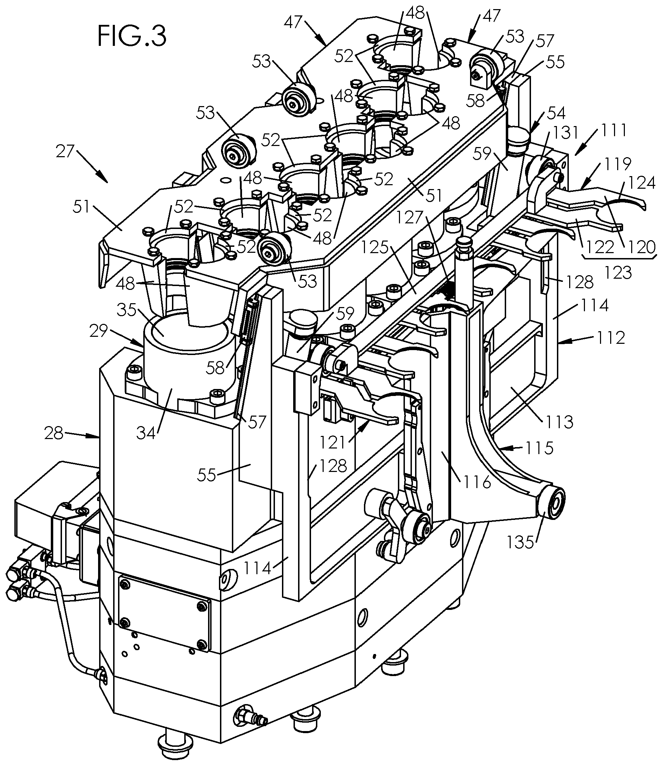

Le porte-moule **27** comprend par ailleurs une paire de tiroirs **47** portant chacun au moins une demi-bague **48** de col ayant une face **49** interne à l'empreinte du col **17** d'une préforme **2** et une face **50** externe tronconique. Chaque tiroir **47** porte un nombre de demi-bagues **48** égal au nombre de corps **29** de moules (six dans l'exemple illustré). Comme on le voit sur la figure 3, chaque tiroir **47** comprend une plaque **51** munie, sur un bord interne, d'échancrures **52** demi-circulaires au droit de chacune desquelles est fixée (par exemple par vissage) une demi-bague **48** de col.

Chaque demi-bague **48** est montée à l'aplomb d'un corps **29** de moule, et les demi-bagues **48** sont positionnées côte à côte suivant le même profil que les corps **29** de moules (en l'occurrence un arc de cercle, comme on le voit bien sur la figure 3). Les tiroirs **47** sont montés l'un en regard de l'autre de manière que leurs plaques **51** soit coplanaires et leurs échancrures **52** en vis-à-vis. Chaque plaque **51** porte au moins un galet **53** (en l'occurrence une paire de galets **53**) dont la fonction apparaîtra ci-après.

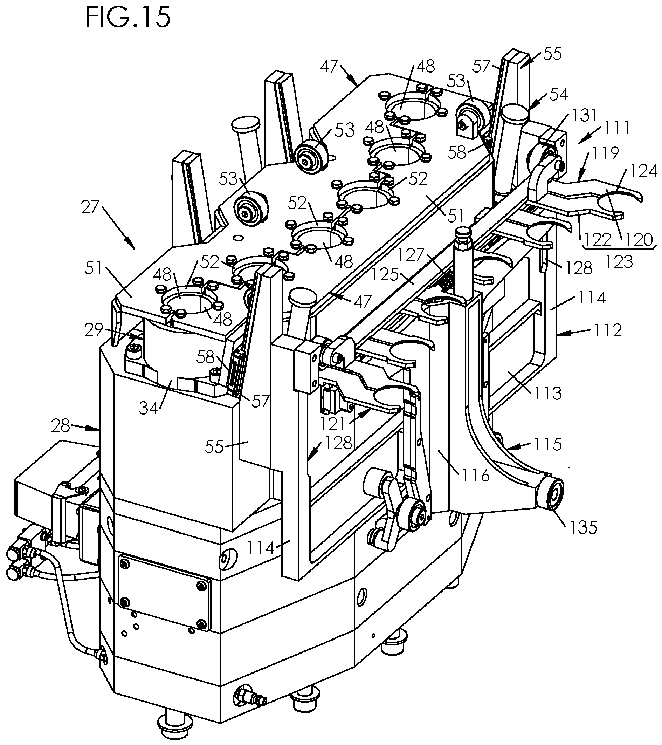

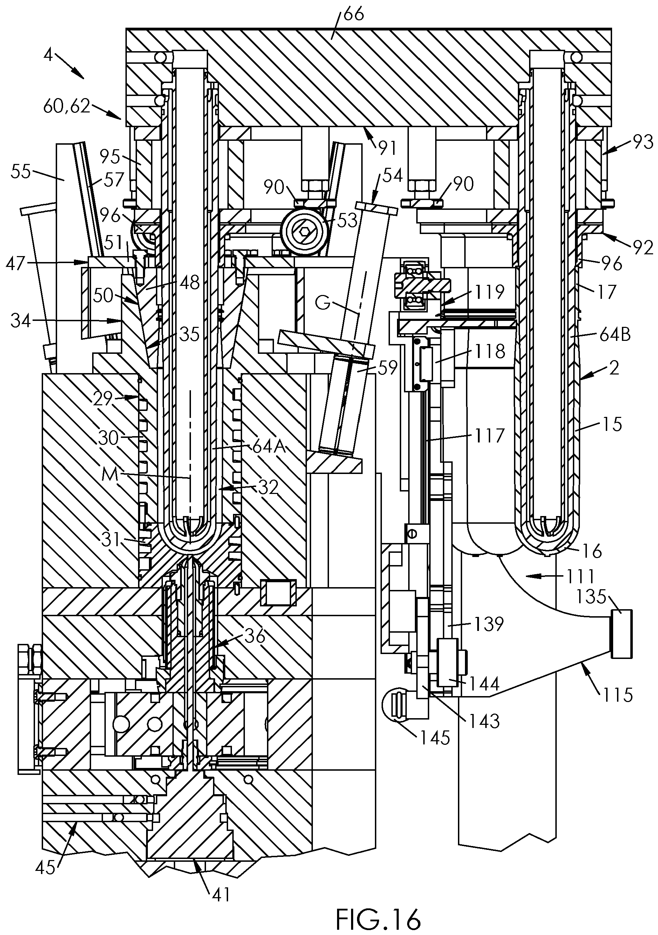

Chaque tiroir **47** est monté mobile par rapport au bloc **28** porte-moule entre une position de démoulage (figures 3, 8, 9) dans laquelle la (ou chaque) demi-bague **48** est écartée, à la fois axialement vers le haut, et latéralement, de la réserve **35** tronconique du corps **29** de moule correspondant, et une position de moulage (figure 15, 16, 19) dans laquelle la (ou chaque) demi-bague **48** est logée dans cette réserve **35** tronconique.

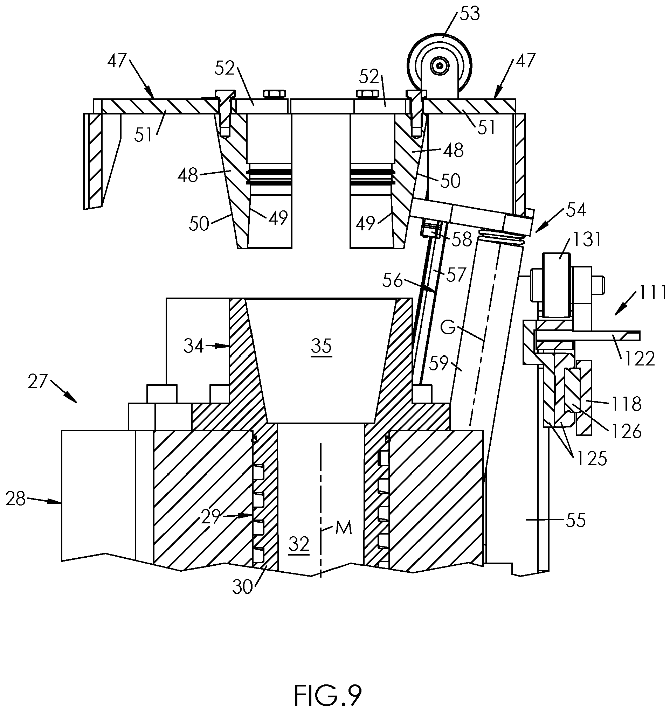

Comme on le voit sur les figures 3 et 9, le porte-moule **27** comprend un système **54** de guidage de chaque tiroir **47,** suivant une direction **G** de guidage inclinée par rapport à la verticale (c'est-à-dire par rapport à l'axe **M** de moulage). Ce système **54** comprend, pour chaque tiroir **47,** une paire de poteaux **55** solidaires du bloc **28** porte-moule, chaque poteau **55** ayant une face **56** interne inclinée (de quelques degrés) par rapport à la verticale, sur laquelle est formée ou fixée une glissière **57** définissant la direction **G** de guidage et sur laquelle est monté en translation un coulisseau **58** solidaire du tiroir **47.** Des ressorts **59** de rappel (par exemple fonctionnant en compression) sont interposés entre le bloc **28** porte-moule et chaque tiroir **47,** suivant la direction **G** de guidage (c'est-à-dire parallèlement aux glissières **57**), pour solliciter le tiroir **47** vers sa position de démoulage.

L'unité **4** de moulage comprend, en troisième lieu, un équipage **60** mobile incluant un chariot **61** monté déplaçable par rapport au bâti **19,** et un porte-noyaux **62** monté sur le chariot **61** en étant mobile en rotation par rapport à celui-ci.

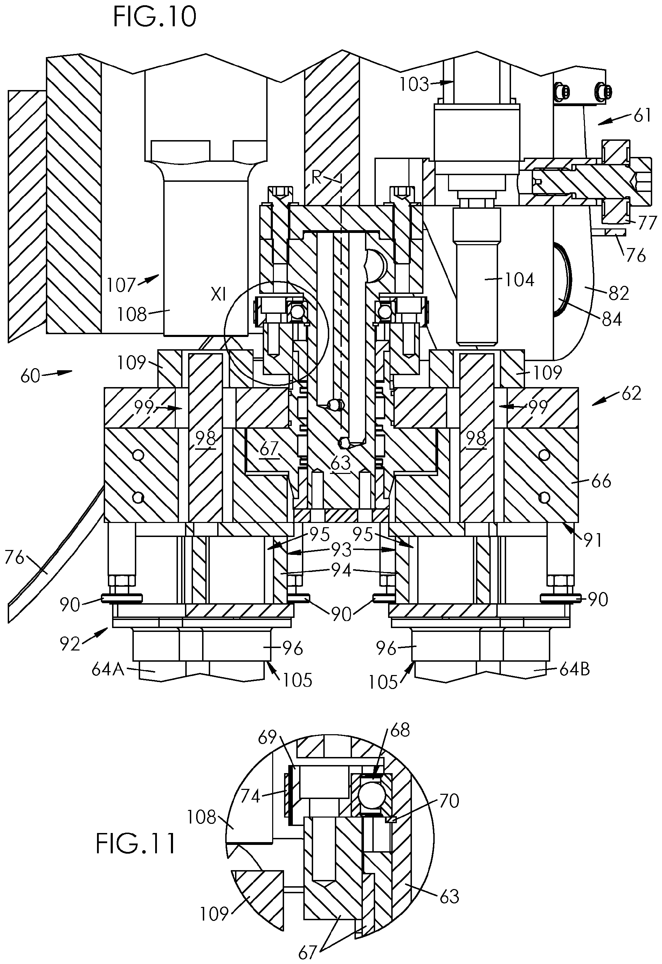

Le chariot **61** comprend un arbre **63** central auquel est accroché le porte-noyaux **62** et qui définit un axe **R** de rotation de celui-ci (figure 10). Dans ce qui suit, on dit d'un composant qu'il est situé vers l'intérieur de l'unité **4** de moulage lorsqu'il se trouve entre l'arbre **63** central et la potence **21 ;** à l'inverse, on dit d'un composant qu'il est situé vers l'extérieur (ou vers la périphérie) de l'unité **4** de moulage lorsqu'il se trouve de l'autre côté de l'arbre **63** central, par rapport à la potence **21.** Compte tenu de ces définitions, on voit que les corps **29** de moule sont situés vers l'intérieur de l'unité **4** de moulage.

Le porte-noyaux **62** porte au moins une paire de noyaux, à savoir un noyau **64A** primaire oblong et un noyau **64B** secondaire oblong écartés l'un de l'autre, chacun à l'empreinte d'une face **65** interne du corps **15** d'une préforme **2.**

Selon un mode de réalisation illustré sur les figures, le porte-noyaux **62** porte deux rangées de noyaux comprenant chacune un nombre de noyaux égal au nombre de corps **29** de moule, à savoir une rangée de noyaux **64A** primaires et une rangée de noyaux **64B** secondaires. Les noyaux **64A, 64B** de chaque rangée s'étendent côte à côte suivant le même profil et le même écartement que les corps **29** de moule dans lesquels ils sont destinés à être logés.

Ainsi, comme on peut le voir notamment sur les figures 2, 7, 13, 14, 17, 25 et 27, les noyaux **64A, 64B** de chaque rangée s'étendent côté à côté suivant un profil courbe, de préférence circulaire.

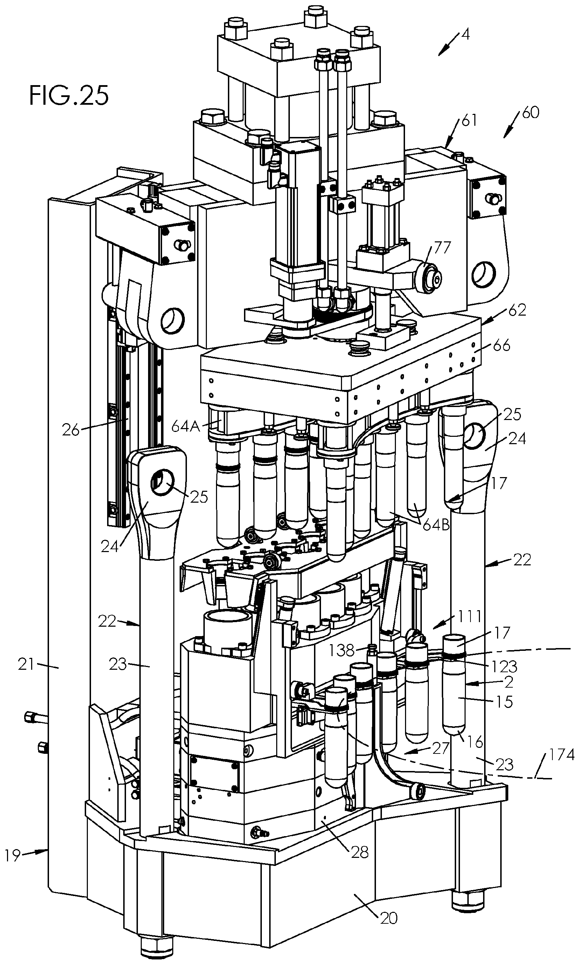

Les noyaux **64A** primaires et les noyaux **64B** secondaires sont identiques et leur dénomination, arbitraire, ne vise qu'à faciliter la compréhension de la présente description. Les noyaux **64A** primaires nus sont bien visibles sur les figures 2, 7 et 8 ; les noyaux **64B** secondaires nus sont quant à eux bien visibles sur la figure 25.

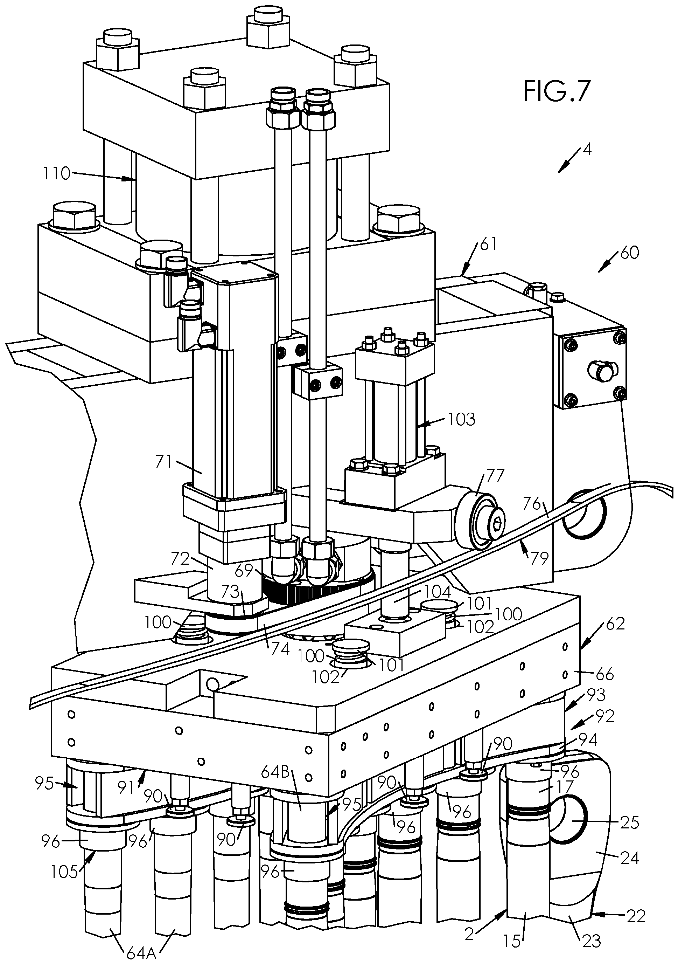

Comme on le voit sur les figures 7 et 10, le porte-noyaux **62** comprend une platine **66** sous laquelle sont montés les noyaux **64A, 64B.**

La platine **66** comporte un fourreau **67** dans lequel est emmanché l'arbre **63** central du chariot **61.** La rotation du porte-noyaux **62** par rapport au chariot **61** est réalisée au moyen d'un roulement **68** (par exemple à billes ou à rouleaux coniques) interposé entre l'arbre **63** central et le fourreau **67.** Le fourreau **67** porte, à son extrémité supérieure, au niveau du roulement **68,** une couronne **69** dentée par laquelle le porte-noyaux **62** est entraîné en rotation. La suspension de la platine **66** au chariot **61** est réalisée par l'intermédiaire d'un circlips **70** monté sur l'arbre **63** central et formant une butée d'arrêt pour le roulement **68.**

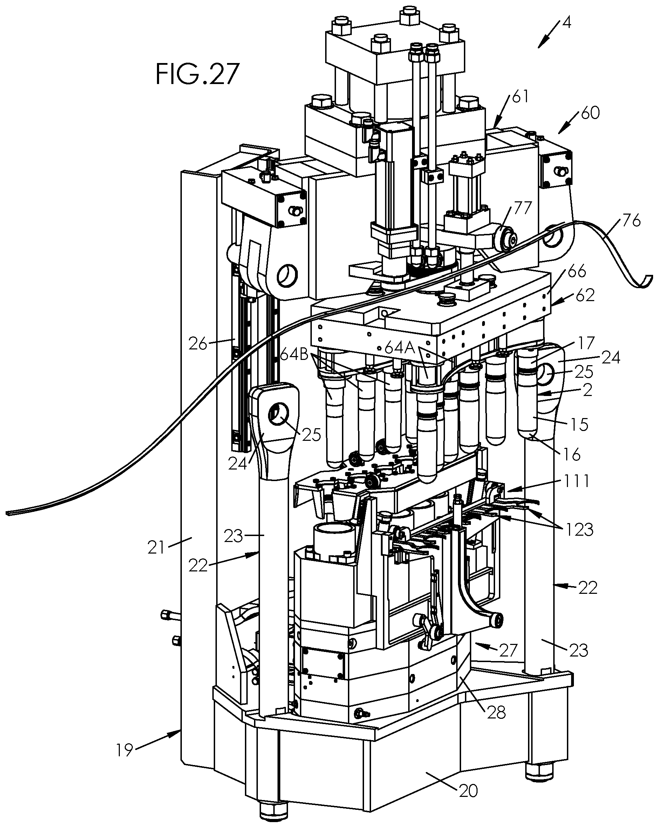

Par ailleurs, le chariot **61** porte un moteur **71** (de préférence un moteur sans balais, ce type de moteur offrant un contrôle angulaire précis) ayant un arbre **72** de sortie pourvu d'un pignon **73** accouplé à la couronne **69** dentée au moyen d'une courroie **74.** La rotation de l'arbre **72** de sortie du moteur **71** entraîne par conséquent (via le pignon **73,** la courroie **74** et la couronne **69** dentée) la rotation du porte-noyaux **62** autour de l'arbre **63** central, entre :
∘ une position d'alignement dite primaire (figures 2, 8, 13, 14, 16, 17, 18) dans laquelle chaque noyau **64A** primaire s'étend, vers l'intérieur de l'unité **4** de moulage, dans l'alignement d'un corps **29** de moule tandis que chaque noyau **64B** secondaire est désaxé par rapport au corps **29** de moule vers l'extérieur, et
∘ une position d'alignement dite secondaire (figure 27) dans laquelle les noyaux primaire(s) **64A** et secondaire(s) **64B** sont permutés.

Le chariot **61** est lui-même monté en translation par rapport au bâti **19,** au moyen de coulisses **75** coopérant avec les rails **26** de guidage, entre :
∘ une position de moulage dans laquelle chaque noyau (primaire **64A** dans la position d'alignement primaire du porte-noyaux **62,** secondaire **64B** dans la position d'alignement secondaire du porte-noyaux **62**) est logé dans un corps **29** de moule, et
∘ une position de démoulage, décalée axialement (vers le haut) par rapport à la position de moulage, et dans laquelle le noyau **64A** (respectivement **64B)** est écarté axialement du corps **29** de moule.

Comme illustré sur la figure 2, le mouvement de translation du chariot **61** est commandé par un chemin **76** de came supérieur avec lequel coopère un suiveur **77** de came (en l'occurrence sous forme d'un galet) monté en rotation sur le chariot **61.** Le chemin **76** de came supérieur s'étend à la périphérie du carrousel **3,** sur au moins une portion angulaire du parcours de l'unité **4** de moulage. Ce chemin **76** de came supérieur comprend des portions **78** basses, qui lorsque le suiveur **77** de came s'y trouve permettent au chariot **61** d'adopter sa position de moulage sous l'effet de son propre poids, et au moins une portion **79** surélevée, qui lorsque le suiveur **77** de came s'y trouve soulève le chariot **61** pour le placer dans sa position de démoulage.

Comme illustré sur la figure 2, et plus particulièrement dans le médaillon de détail, le chariot **61** est équipé d'un dispositif **80** de verrouillage en position de moulage. Ce dispositif **80** comprend des verrous **81,** en nombre égal aux colonnes **22,** chacun muni :
- d'une chape **82** définissant un logement **83** pour la tête **24** de la colonne **22,** cette chape **82** étant percée d'un trou **84** traversant, et
- d'un pêne **85** monté coulissant horizontalement dans le trou **84** de la chape **82** entre une position de déverrouillage (figure 2) dans laquelle le pêne **85** est écarté du logement, et une position de verrouillage dans laquelle le pêne **85** s'étend au travers du logement **83.**

Pour assurer le mouvement de translation du pêne **85,** chaque verrou **81** comprend un actionneur **86,** par exemple sous forme d'un vérin (pneumatique, hydraulique ou encore électrique) muni d'une tige solidaire du pêne **85.** Selon un mode particulier de réalisation illustré sur la figure 2, le vérin **86** comprend un corps **87** monté sur la chape **82,** et la tige de ce vérin **86** est rendue solidaire du pêne **85** au moyen d'une baguette **88** verticale qui peut coulisser dans une rainure **89** pratiquée dans le corps **87** du vérin **86.**

Comme on le voit bien sur la figure 19, le porte-noyaux **62** porte, pour chaque galet **53** de tiroir **47,** un élément **90** d'appui (en l'espèce sous forme de patin) en saillie à partir d'une face **91** inférieure de la platine **66.** Lors du déplacement du porte-noyaux **62** vers la position de moulage, chaque élément **90** d'appui vient, par application contre un galet **53,** repousser le tiroir **47** vers sa position de moulage, à l'encontre du ressort **59** de rappel (dont la partie centrale est représentée sous forme d'un cylindre sur la figure 19, pour des raisons de simplicité).

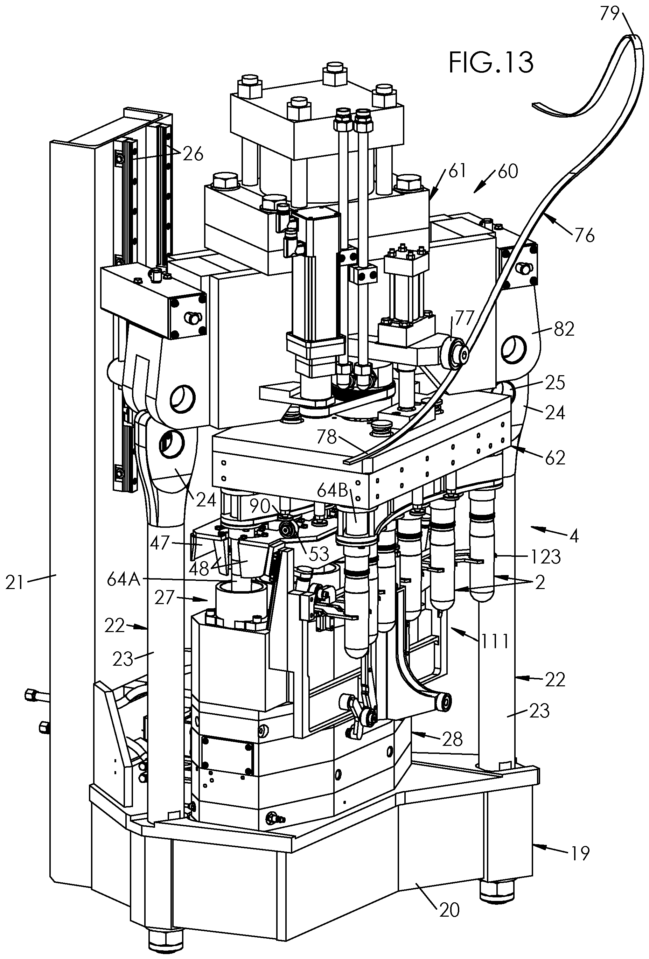

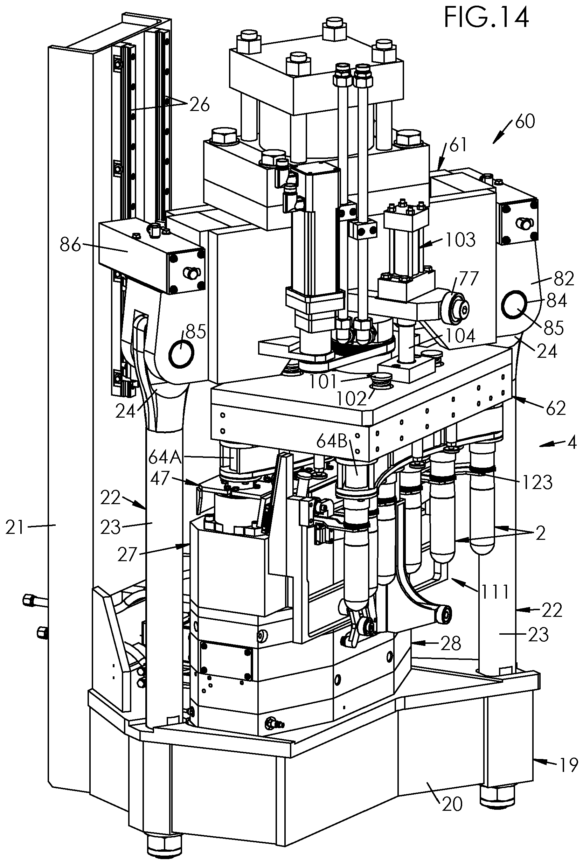

En descendant vers la position de moulage, le chariot **61** entraîne dans son mouvement de descente le porte-noyaux **62** (en position de d'alignement primaire sur la figure 19), dont la platine **66** entraîne à son tour, via les éléments **90** d'appui en contact roulant avec les galets **53** (comme illustré notamment sur la figure 13), les tiroirs **47** qui effectuent chacun un mouvement de translation oblique jusqu'à leur position de moulage. En fin de course, c'est-à-dire en position de moulage, les noyaux **64A** primaires sont chacun reçus dans un corps **29** de moule, et les demi-bagues **48** sont assemblées autour du noyau **64A** en étant logées dans la réserve **35** tronconique pour former par paire une bague à l'empreinte du col **17** de la préforme **2** à former (figures 15, 16, 19). Tant que l'équipage **60** mobile n'a pas atteint sa position de moulage, les verrous **81** demeurent dans leur position de déverrouillage (figure 2). Dès lors, en revanche, que l'équipage **60** mobile a atteint sa position de moulage, les têtes **24** des colonnes **22** étant logées dans les chapes **82,** les pênes **85** des verrous **81** sont placés en position de verrouillage (figure 14) par commande de leurs vérins **86** respectifs. Les pênes **85** traversent alors conjointement les trous **25, 84** et assurent la solidarisation rigide du chariot **61** au bâti **19** par l'intermédiaire des colonnes **22.**

L'unité **4** de moulage comprend, en quatrième lieu, un dispositif **92** de dévêtissement des préformes **2** moulées de leurs noyaux **64A, 64B** respectifs. Ce dispositif **92** de dévêtissement est embarqué sur l'équipage **60** mobile et comprend, pour chaque rangée de noyaux **64A, 64B,** un extracteur **93** incluant une cage **94** munie d'une rangée d'alvéoles **95** au travers de chacun desquels s'étend un noyau **64A, 64B.** Dans le prolongement de chaque alvéole **95,** la cage **94** comprend un poussoir **96** muni d'un alésage **97** central cylindrique dans lequel le noyau **64A, 64B** est monté en translation axiale. Chaque extracteur **93** comprend en outre un doigt **98** solidaire de la cage **94,** qui s'étend axialement dans une ouverture **99** traversante formée dans la platine **66** (figure 10).

Chaque extracteur **93** est monté en translation axiale, par rapport à la platine **66,** entre une position haute, dite de repos, dans laquelle l'extracteur **93** est en butée contre la face **91** inférieure de la platine **66,** et une position basse, dite d'extraction, dans laquelle l'extracteur **93** est écarté de la face **91** inférieure de la platine **66.**

Le dispositif **92** de dévêtissement comprend, pour chaque extracteur **93,** un ressort **100** de rappel qui sollicite l'extracteur **93** vers sa position de repos. Plus précisément, l'extracteur **93** comprend (figure 7) une paire de tiges **101** de guidage chacune montée en translation dans un alésage **102** formé dans la platine **66,** et un ressort **100** de rappel est monté sur chaque tige **101** de guidage en étant comprimé entre une tête élargie de la tige **101** et un lamage formé dans la platine **66** autour de cet alésage **102.**

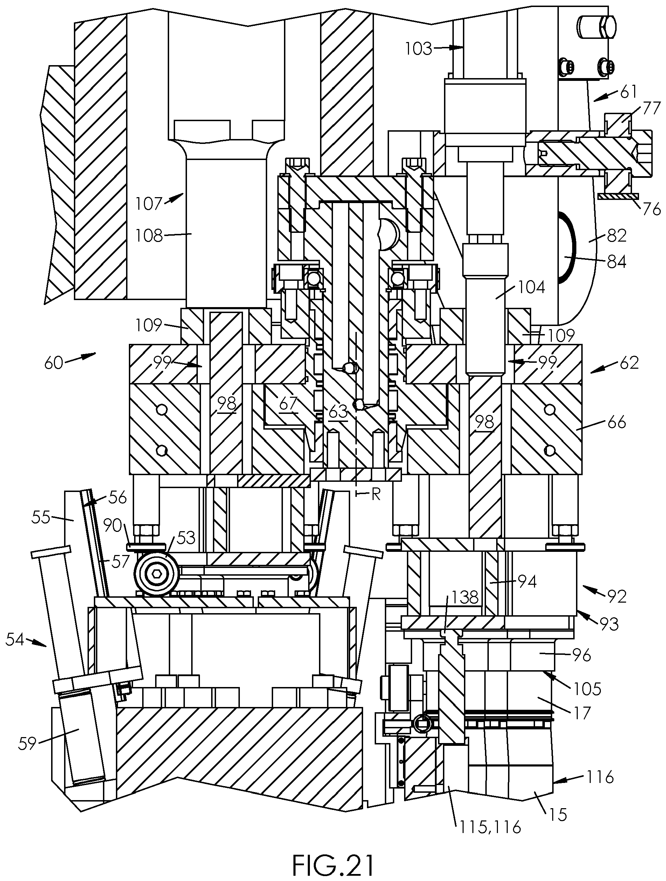

Pour déplacer chaque extracteur **93** vers sa position d'extraction, l'unité **4** de moulage comprend un actionneur **103** embarqué sur le chariot **61,** qui comprend un pion **104** monté en translation par rapport au chariot **61** entre une position haute (figure 10) dans laquelle le pion **104** est écarté axialement du doigt **98** et permet ainsi à l'extracteur **93,** sous l'action du (des) ressort(s) **100** de rappel, d'occuper sa position de repos, et une position basse (figure 21) dans laquelle le pion **104** exerce sur le doigt **98** une poussée axiale vers le bas, ce qui déplace l'extracteur **93** vers sa position d'extraction pour désolidariser la préforme **2** moulée de son noyau **64A, 64B,** comme il sera précisé ci-après. Selon un mode de réalisation illustré sur les figures, l'actionneur **103** se présente sus forme d'un vérin pneumatique (ou hydraulique, ou encore électrique) dont une tige forme le pion **104.** L'actionneur **103** est fixé sur le chariot **61** au droit de l'ouverture **99** située vers l'extérieur de l'unité **4** de moulage.

Outre la fonction de dévêtissement de la préforme **2** moulée de son noyau **64A, 64B** après permutation de celui-ci, chaque poussoir **96** remplit également une fonction de fermeture de la cavité **32** en position de moulage, comme illustré sur la figure 19. Plus précisément, le poussoir **96** présente, à une extrémité inférieure, une face **105** annulaire à l'empreinte du buvant **18,** cette face **105** annulaire venant s'appliquer contre les demi-bagues **48** de col appariées en position de moulage.

En position de moulage, le corps **29** de moule, le noyau **64A, 64B** logé dans le corps **29** moule, les demi-bagues **48** assemblées autour du noyau **64A, 64B** et le poussoir **96** en butée contre les demi-bagues **48** assemblées forment ensemble un moule **106** complet à l'empreinte d'une préforme **2.**

La matière plastique injectée dans la cavité **32** via l'injecteur **41** exerce sur la préforme **2** et sur le poussoir **96** (et donc sur le porte-noyaux **62**) une poussée dirigée vers le haut, suivant l'axe **M** de moulage. L'axe **M** de moulage étant décalé de l'axe **R** de rotation du porte-noyaux **62** vers l'intérieur de l'unité **4** de moulage, et la platine **66** s'étendant en porte-à-faux par rapport à l'arbre **63** central, cet effort tend à faire basculer le porte-noyaux **62** autour d'un axe horizontal.

Afin d'équilibrer les efforts sur le porte-noyaux **62,** l'unité **4** de moulage comprend, en cinquième lieu, un dispositif **107** d'étayage embarqué sur le chariot **61** et incluant une butée **108** positionnée vers l'intérieur de l'unité **4** de moulage, à l'aplomb des corps **29** de moule.

Cette butée **108** est montée en translation par rapport au chariot **61** entre une position haute (ou inactive) dans laquelle la butée **108** est écartée du porte-noyaux **62,** et une position basse (ou active) dans laquelle la butée **108** est appliquée contre le porte-noyaux **62** pour compenser les efforts axiaux résultant de la pression de la matière injectée dans le moule **106** pour former la préforme **2.**

Selon un mode de réalisation illustré sur les figures, et en particulier sur la figure 21, la butée **108** s'étend axialement au droit du doigt **98** situé vers l'intérieur de l'unité **4** de moulage. Comme on le voit sur la figure 10, la platine **66** porte, dans le prolongement de l'ouverture **99,** une entretoise **109** dans laquelle est logée une extrémité supérieure du doigt **98,** en position de repos de l'extracteur **93** situé vers l'intérieur de l'unité **4** de moulage. Dans sa position active, la butée **108** vient s'appliquer contre l'entretoise **109** qui préserve ainsi le doigt **98** de tout contact avec la butée **108.**

Selon un mode de réalisation, la butée **108** est formée par une tige d'un vérin **110** pneumatique (ou hydraulique, ou encore électrique) fixé (figure 7) sur le chariot **61** au droit de l'ouverture **99** située vers l'intérieur de l'unité **4** de moulage.

L'unité **4** de moulage comprend, en sixième lieu, un dispositif **111** de préhension des préformes **2** moulées dévêtues de leurs noyaux **64A, 64B.**

Ce dispositif **111** de préhension, visible isolément sur la figure 3, est monté sur une face extérieure du porte-moule **27.** Plus précisément, le dispositif **111** de préhension est solidaire du bloc **28** porte-moule, et comprend un cadre **112** fixé sur celui-ci. Ce cadre **112** présente un profil en U ; il comprend une base **113** horizontale et deux bras **114** verticaux qui s'étendent chacun vers le haut à partir d'une extrémité de la base **113** et sont fixés sur les poteaux **55** vers l'extérieur, à l'opposé de la face **56** interne (c'est-à-dire à l'opposé des glissières **57**).

Le dispositif **111** de préhension comprend un support **115** monté coulissant verticalement sur le bloc **28** porte-moule. Plus précisément, le support **115** présente une forme en T et comprend un montant **116** qui s'étend verticalement et par lequel le support **115** est monté coulissant sur le bloc **28** porte-moule par l'intermédiaire d'une glissière **117,** et une traverse **118** qui s'étend horizontalement de part et d'autre du montant **116.**

Le dispositif **111** de préhension comprend également une paire de peignes, à savoir :
- un peigne **119** droit comprenant au moins une mâchoire **120** droite, et
- un peigne **121** gauche comprenant au moins une mâchoire **122** gauche disposée en regard de la mâchoire droite et qui définit avec celle-ci une pince **123** de préhension d'une préforme.

En pratique, chaque peigne **119, 121** comprend une rangée de mâchoires **120, 122** (au nombre de six dans l'exemple illustré) qui définissent deux à deux une série de pinces **123** de préhension. Ces pinces **123** sont disposées côte à côte à l'aplomb des noyaux **64A** ou **64B** situés du côté extérieur de l'unité **4** de moulage, et sont agencés selon un profil identique (en l'espèce courbe, et plus précisément en arc de cercle).

Les peignes **119, 121** sont montés mobiles l'un par rapport à l'autre entre une position de libération (figure 3) dans laquelle les mâchoires **120, 122** de chaque pince **123** sont écartées, et une position de préhension (figures 15, 22, 23, 26) dans laquelle les mâchoires **120, 122** sont rapprochées. Comme on le voit bien sur la figure 3, chaque mâchoire **120, 122** présente un bord **124** interne en arc de cercle, de sorte que dans la position de préhension chaque pince **123** entoure le corps **15** d'une préforme **2** au plus près de sa face **33** externe.

Dans l'exemple illustré, chaque peigne **119, 121** présente un barreau **125** horizontal, par lequel le peigne **119, 121** est monté en translation sur la traverse **118** du support **115** par l'intermédiaire d'une coulisse **126,** et dont font saillie les mâchoires **120, 122** vers l'extérieur.

Le dispositif **111** de préhension comprend un ressort **127** de rappel qui sollicite les peignes **119, 121** vers leur position de préhension. Dans l'exemple illustré, le ressort **127** fonctionne en compression ; il est interposé entre les mâchoires **120, 122** les plus centrales des peignes **119, 121,** disposées dos à dos.

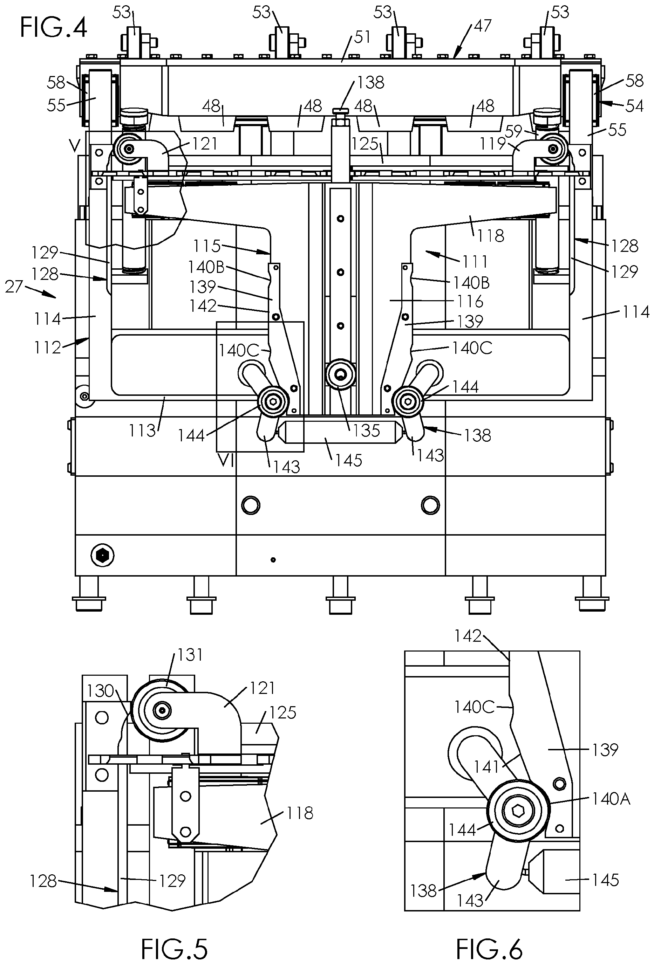

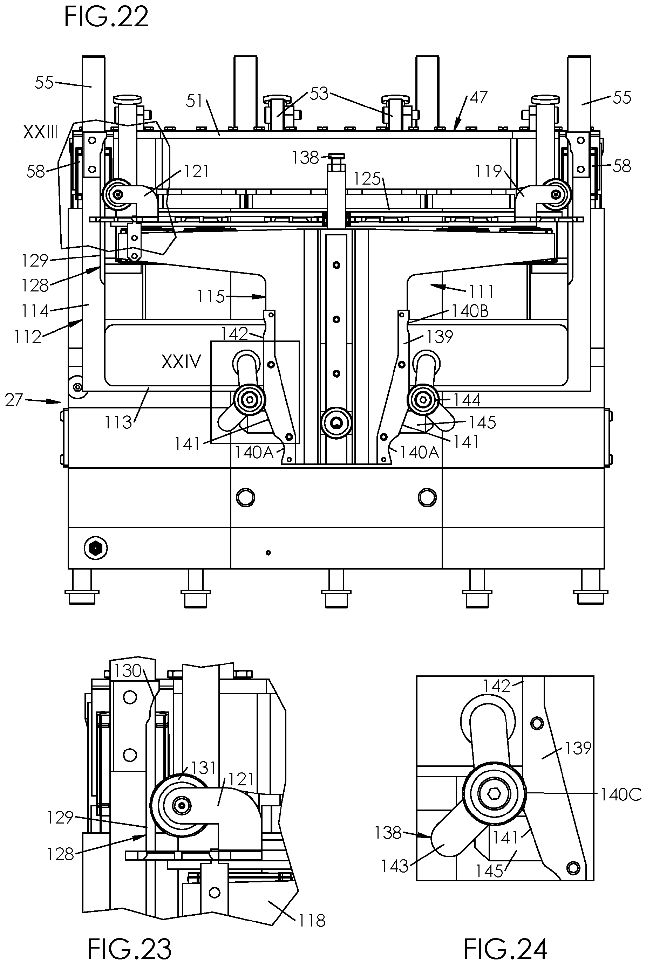

Comme on le voit bien sur les figures 3 et 4, et plus en détail encore sur la figure 5, le cadre **112** porte une paire de chemins **128** de cames latéraux ayant chacun une section **129** principale droite (verticale) et, à partir d'une extrémité supérieure de la section **129** principale, une section **130** rétrécie. Chaque peigne **119, 121** porte un suiveur **131** de came (en l'occurrence sous forme d'un galet) qui coopère avec un chemin **128** de came latéral. Lorsque les suiveurs **131** de cames sont conjointement dans les sections **129** principales des chemins **128** de came latéraux, les peignes **119, 121** sont, sous l'action du ressort **127** de rappel, dans leur position de préhension (figures 22, 23). Lorsque les suiveurs **131** de came sont conjointement dans les sections **130** rétrécies, les peignes **119, 121** sont placés dans leur position de libération à l'encontre du ressort **127** de rappel (figures 3, 4, 5).

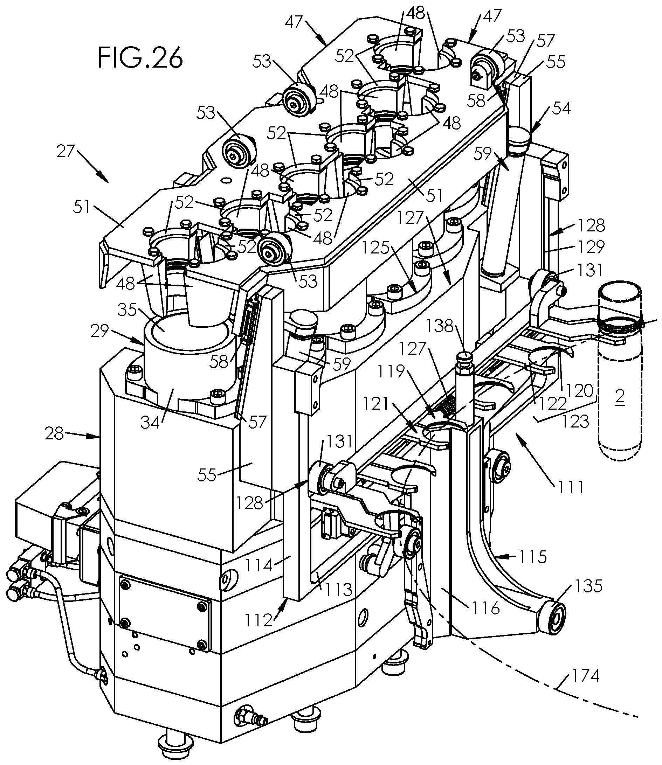

Dans une position haute du support **115,** illustrée sur les figures 3 et 4, celui-ci place les peignes **119, 121,** via les sections **130** rétrécies des chemins **128** de came latéraux et les suiveurs **131** de came, dans leur position de libération. A contrario, dans une position basse du support **115,** illustrée sur la figure 26, celui-ci permet (sous l'action du ressort **127** de rappel) aux peignes **119, 121** d'adopter leur position de préhension.

Comme illustré sur la figure 3, le mouvement de translation du support **115** est commandé par un chemin **132** de came inférieur qui présente localement deux brins **133, 134** superposés. Avec ce chemin **132** de came coopère un suiveur **135** de came (en l'occurrence sous forme d'un galet) monté en rotation sur le support **115.** Le chemin **132** de came inférieur s'étend à la périphérie du carrousel **3,** sur au moins une portion angulaire du parcours de l'unité **1** de moulage. Ce chemin **132** comprend une portion **136** haute, accueille le suiveur **135** de came depuis la position haute (ou une position intermédiaire) du support **115** pour déplacer celui-ci vers sa position basse, et une portion **137** basse dans laquelle le suiveur **135** de came place le support **115** dans sa position basse.

Le dispositif **111** de préhension comprend un patin **138** solidaire du support **115** et apte à venir au contact de l'extracteur **93.**

En outre, selon un mode préféré de réalisation illustré sur les figures, et plus précisément sur les figures 4, 6, 22 et 24, le dispositif **111** comprend :
- sur le montant **116,** une paire de guides **139** pourvus chacun d'une encoche **140A** inférieure, d'une encoche **140B** supérieure et éventuellement d'une encoche **140C** intermédiaire, chaque guide ayant une section **141** inférieure oblique une section **142** supérieure droite, et
- sur le cadre **112,** une paire de leviers **143** montés en rotation sur la base **113** et portant chacun un galet **144** apte à rouler sur un guide **139** et à venir s'emboîter de manière réversible dans les encoches **140A, 140B, 140C.**

Les encoches **140A, 140B, 140C** présentent chacune un profil en arc de cercle, complémentaire d'un galet **144.** Les leviers **143** sont sollicités l'un vers l'autre au moyen d'un ressort **145** de rappel, fonctionnant en l'occurrence en traction. Sous l'effet du ressort **145,** les galets **144** sont en contact permanent avec les guides **139.** L'effort appliqué par le ressort **145** aux leviers **143** est suffisant, lorsque les galets **144** sont logés dans une paire d'encoches **140A, 140B** ou **140C,** pour maintenir le support **115** en position en l'absence de chemin **132** de came inférieur. Dans son mouvement de descente, l'extracteur **93** appuie sur le patin **138** par lequel il sollicite le support **115** vers le bas. Les galets **144,** sollicités l'un vers l'autre par le ressort **145,** sont en contact avec les sections **141** obliques des guides **139** et appliquent au support **115** un effort dont la composante verticale s'oppose à la chute libre du support **115** sans toutefois empêcher le mouvement descendant de celui-ci sous l'action de l'extracteur **93.**

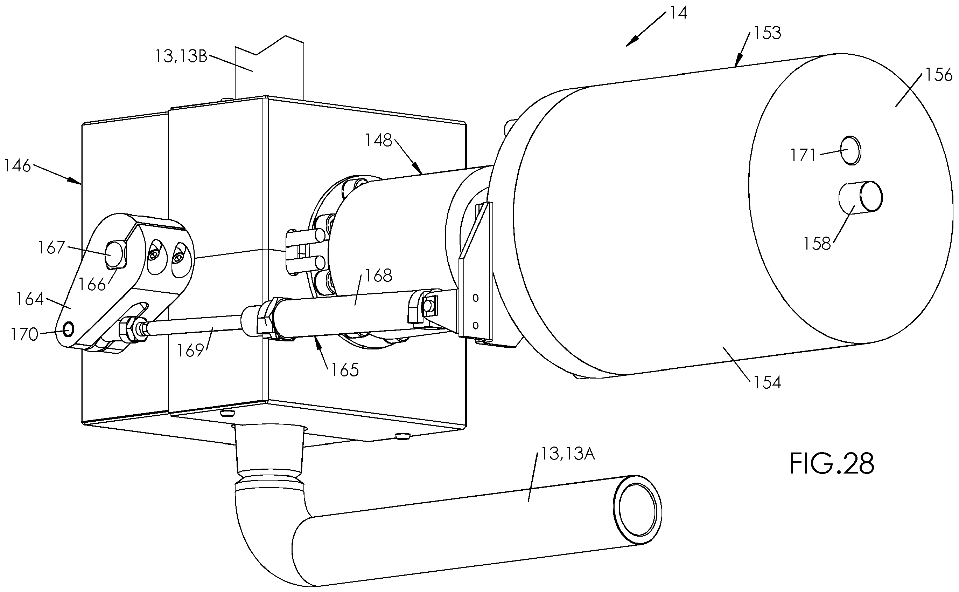

On décrit à présent le dispositif **14** d'injection dosimétrique, en référence aux figures 28 à 34. Ce dispositif **14** est conçu pour délivrer à chaque unité **4** de moulage, à laquelle il est raccordé fluidiquement par le conduit **13** d'alimentation, une dose prédéterminée de matière plastique correspondant au volume de matière requis pour le moulage d'une préforme.

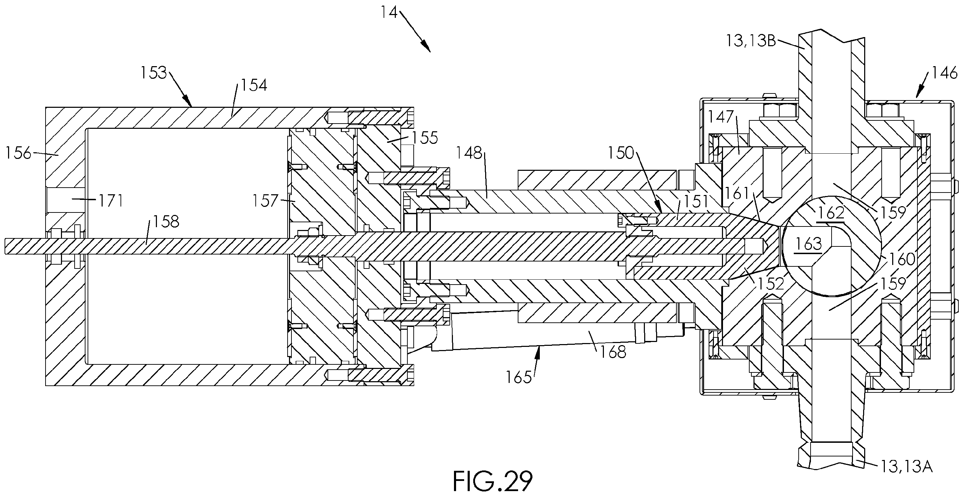

Comme on le voit sur les figures 28 et 29, le dispositif **14** d'injection dosimétrique comprend :
- une vanne **146** interposée sur le conduit **13** d'alimentation qu'elle divise en une section **13A** amont, qui se raccorde au joint **11** tournant, et une section **13B** aval, qui se raccorde au circuit **40** de distribution de l'unité **4** de moulage, la vanne comprenant un corps **147** solidaire de la section **13A** amont et de la section **13B** aval au moyen de brides,
- un cylindre **148** de dosage, solidaire du corps **147** de la vanne **146** et définissant une chambre **149** interne cylindrique,
- un plongeur **150** monté coulissant dans le cylindre **148** de dosage ; ce plongeur **150** présente un corps **151** cylindrique d'un diamètre externe correspondant (au jeu près) au diamètre interne du cylindre **148** de dosage, et une tête **152** tronconique,
- un vérin **153** de commande de la position du plongeur **150,** solidaire du cylindre **148** et qui comprend une chemise **154** fermée par une paroi **155** avant et une paroi **156** arrière, un piston **157** monté coulissant dans la chemise **154** et une tige **158** traversant les parois **155, 156** et ayant une portion centrale sur laquelle est fixé le piston **157,** et une extrémité avant par laquelle la tige **158** est solidaire du plongeur **150.**

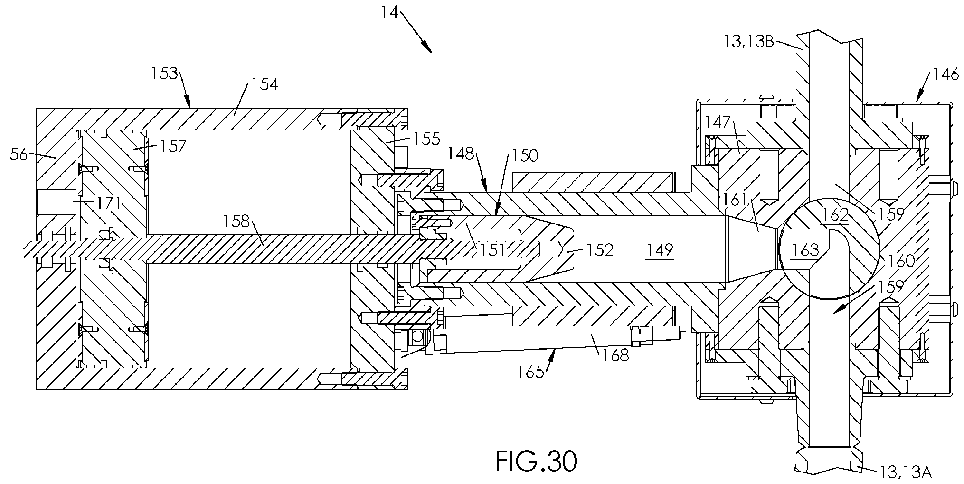

Le corps **147** de la vanne **146** est percé d'un conduit **159** de raccordement fluidique de la section **13A** amont à la section aval **13B.** Le corps **147** est par ailleurs percé d'un alésage **160** perpendiculaire au conduit **159** de raccordement et dans lequel celui-ci débouche, et d'une ouverture **161** latérale débouchant, d'un côté, dans l'alésage **160** perpendiculairement au conduit **159** de raccordement et, du côté opposé, dans la chambre **149** du cylindre **148** de dosage. Comme on le voit bien sur les figures 29 et 30, l'ouverture **161** définit un siège tronconique contre lequel est apte à venir s'appliquer la tête **152** du plongeur **150.**

La vanne **146** est du type à trois voies en L et comprend un boisseau **162** cylindrique percé d'un canal **163** coudé en L, monté en rotation dans l'alésage **160** entre une position de charge (figure 30) dans laquelle le canal **163** met en communication fluidique la section **13A** amont du conduit **13** d'alimentation avec la chambre **149,** et une position d'injection dans laquelle, le boisseau **162** ayant effectué une rotation d'un quart de tour dans l'alésage **160,** le canal **163** met en communication fluidique la chambre **149** avec la section **13B** aval du conduit **13** d'alimentation.

Pour commander la rotation du boisseau **162,** le dispositif **14** d'injection dosimétrique comprend un levier **164** solidaire en rotation du boisseau **162,** couplé à un vérin **165** de commande, comme illustré sur les figures 28, 31 et 33.

Plus précisément, le levier **164** présente une empreinte **166** à section carrée, dans laquelle est emboîté un embout **167** complémentaire (également à section carrée) solidaire du boisseau **162.** Le vérin **165** de commande comprend un corps **168** de vérin solidaire de la chemise **154,** et une tige **169** couplée en rotation au levier **164** par l'intermédiaire d'un axe **170.**

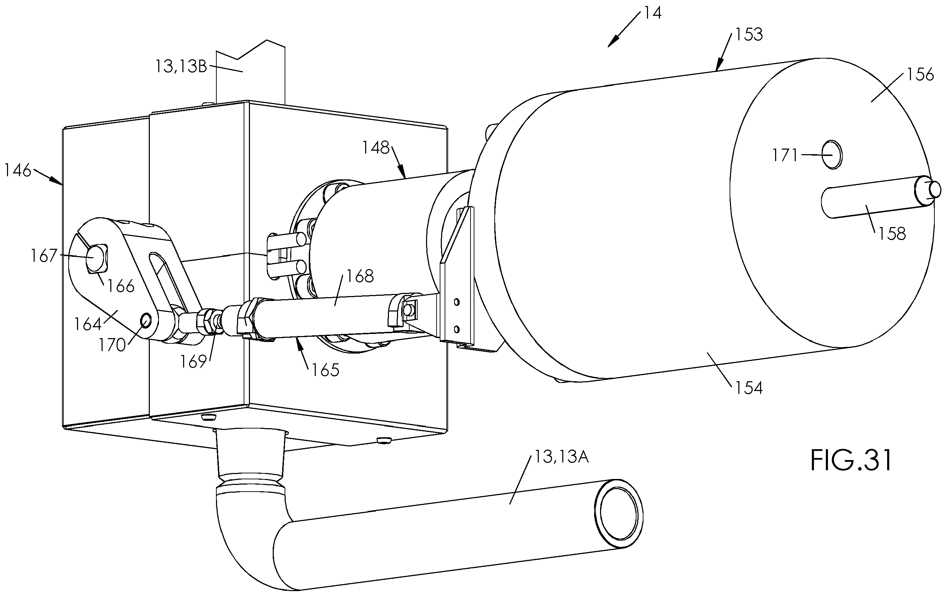

Dans une position sortie de la tige **169,** le vérin **165** place le boisseau **162** dans sa position de charge (figures 28, 29). Dans une position rentrée de la tige **169,** le vérin **165** place le boisseau **162** dans sa position d'injection (figures 31 à 34).

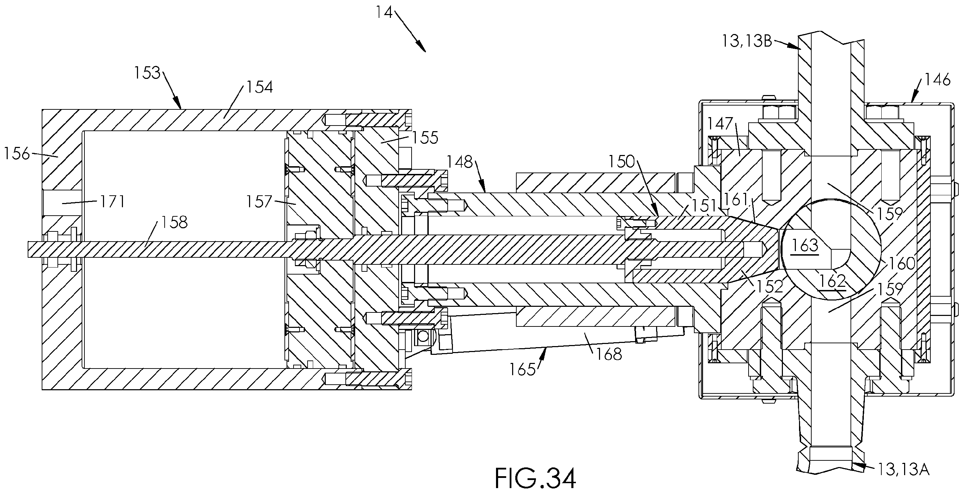

Le plongeur **150** est monté coulissant dans le cylindre **148** de dosage entre une position avancée (figures 29, 34) dans laquelle la tête **152** du plongeur **150** est appliquée contre l'ouverture **161** qu'elle obture ainsi, et une position reculée (figure 30) dans laquelle le plongeur **150** est écarté de l'ouverture **161,** le volume ainsi conjointement défini par la chambre **149** et l'ouverture **161** entre la tête **152** du plongeur **150** et le boisseau **162** correspondant à une dose de matière nécessaire au formage d'une préforme **2.**

De même, le piston **157** est monté coulissant dans la chemise **154** entre une position avancée (figures 29, 34) dans laquelle le piston **157** est en butée contre la paroi **155** avant, et une position reculée (figure 30) dans laquelle le piston **157** est en butée contre la paroi **156** arrière.

Le dispositif **14** d'injection dosimétrique fonctionne de la manière suivante.

Partant d'une configuration initiale du dispositif **14** d'injection, dans laquelle le boisseau **162** est dans sa position de charge et le plongeur **150** dans sa position avancée (figure 29), la matière plastique fondue (à l'état fluide, sous pression), poussée par la vis depuis le cylindre **7** de l'extrudeuse **5,** circule dans la section **13A** amont du conduit **13** d'alimentation et dans le canal **163** coudé du boisseau **162,** et repousse le plongeur **150** vers sa position reculée. Le piston **157** est solidairement entraîné par le plongeur **150** vers sa position reculée, jusqu'à venir en butée contre la paroi **156** arrière. En position reculée du piston **157** (et donc du plongeur **150**), la chambre **149** et l'ouverture **161** latérale sont remplies d'un volume de matière plastique correspondant à la dose requise pour former une préforme **2.**

Le vérin **165** de commande place alors le boisseau **162,** par un mouvement d'un quart de tour, dans sa position d'injection.

Puis le déplacement du piston **157** de sa position reculée vers sa position avancée est commandé par l'injection dans la chemise **154** d'un fluide (tel que de l'air, de l'eau ou de l'huile) sous pression, par un trou **171** pratiqué dans la paroi **156** arrière. Le déplacement du piston **157** entraîne de manière solidaire le déplacement du plongeur **150,** via la tige **158,** de sa position reculée vers sa position avancée, jusqu'à ce que le piston **157** atteigne sa position avancée, en butée contre la paroi **155** avant, le plongeur **150** atteignant alors sa position avancée avec sa tête **152** en butée contre l'ouverture **161.** Le mouvement d'avancée du plongeur **150** provoque l'injection de la dose de matière dans la section **13B** aval du conduit **13** d'alimentation. C'est ainsi qu'une dose de matière est injectée dans le moule **106** pour former une préforme **2.**

On décrit à présent le fonctionnement de l'unité **4** de moulage, partant d'une configuration initiale dans laquelle le chariot **61** est dans sa position haute (de démoulage), et le porte-noyaux **62** dans sa position d'alignement primaire, comme illustré sur la figure 2.

Dans cette configuration :
- le dispositif **14** d'injection dosimétrique est en cours (ou en fin) de dosage;
- le piston **42** de l'injecteur **41** est en position d'obturation ;
- le suiveur **77** de came du chariot **61** se trouve dans la portion **79** surélevée du chemin **76** de came supérieur ;
- les noyaux **64A** primaires se trouvent dans leur position d'alignement primaire, à l'aplomb de leurs corps **29** de moules respectifs et dans l'axe de ceux-ci ;
- les noyaux **64B** secondaires se trouvent dans leur position d'alignement secondaire, du côté extérieur de l'unité **4** de moulage ; comme on le voit sur la figure 2, les noyaux **64B** secondaires sont vêtus de préformes **2** qui viennent d'être moulées ;
- les tiroirs **47** sont en position de démoulage ;
- le support **115** du dispositif **111** de préhension est en position haute et les peignes **119, 121** en position de libération, le support **115** étant maintenu dans cette position par coopération des galets **144** avec les encoches **140A** inférieures (figure 6), et les peignes **119, 121** maintenus en position de libération par coopération de leurs galets **131** respectifs avec les sections **130** rétrécies des chemins **128** de cames latéraux ;
- les pênes **85** des verrous **81** sont en position de déverrouillage ;
- la butée **108** du dispositif **107** d'étayage est dans sa position inactive ;
- le pion **104** de l'actionneur **103** est dans sa position haute et l'extracteur **93** dans sa position de repos.

La rotation de l'unité **4** de moulage entraînée par le carrousel **3** provoque la descente de l'équipage **60** mobile dès lors que le suiveur **77** de came du chariot **61** roule sur une portion **172** descendante du chemin **76** de came supérieur, joignant la portion **79** surélevée à une portion **78** basse.

La descente de l'équipage **60** mobile provoque la pénétration des noyaux **64A** primaires dans leurs corps **29** de moules respectifs, le déplacement oblique des tiroirs **47** vers leur position de moulage, par contact roulant des éléments **90** d'appui sur les galets **53** et l'introduction axiale, dans les pinces **123,** des préformes **2** précédemment moulées, portées par les noyaux **64B** secondaires (figure 13).

Lorsque le chariot **61** atteint sa position de moulage, les moules **106** sont constitués (par assemblage des corps **29** de moule, des demi-bagues **48** et des poussoirs **96**). Les têtes **24** des colonnes **22** sont reçues dans les chapes **82.** Les préformes **2** accrochées aux noyaux **64B** secondaires coopèrent avec les pinces **123** sous leurs cols **17** respectifs. Les verrous **81** sont alors déplacés, sous l'action de leurs vérins **86,** vers leur position de verrouillage, ce qui assure le verrouillage du chariot **61** sur les colonnes **22** (et donc sur le bâti **19**). Le suiveur **135** de came est déplacé vers le bas, par coopération avec le chemin **132** de came inférieur, ce qui provoque la fermeture des pinces **123** autour des préformes **2** sous leurs cols **17** respectifs (figure 14). Le dispositif **107** d'étayage est actionné, la butée **108** étant déplacée par son vérin **110** vers sa position active dans laquelle elle vient s'appliquer contre l'entretoise **109.**

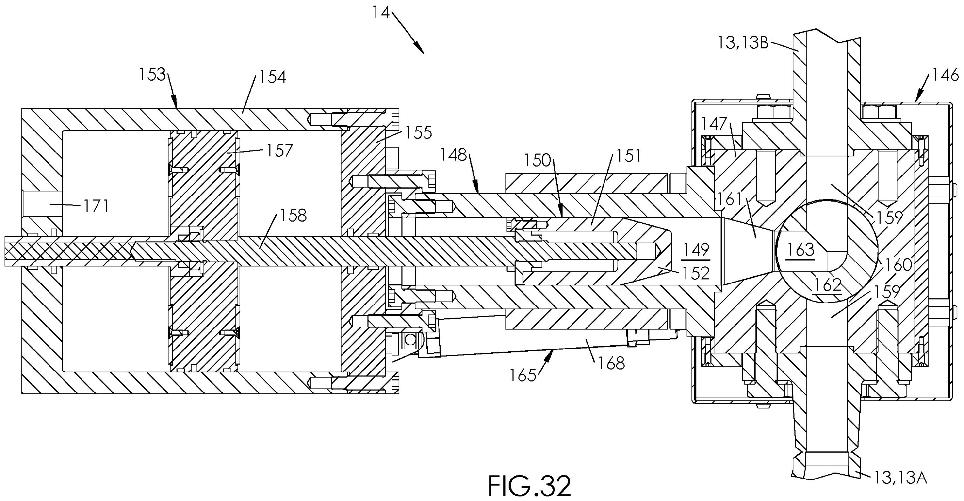

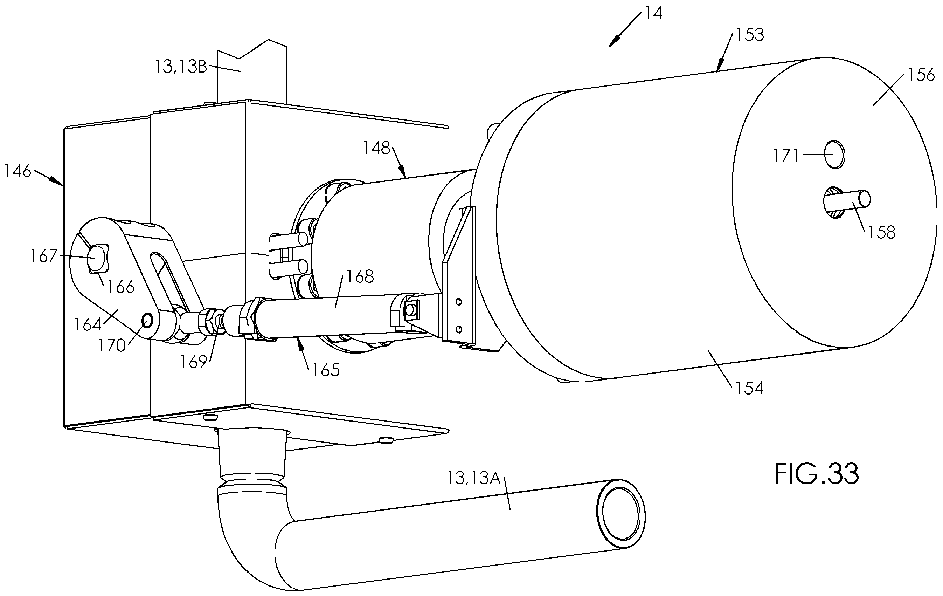

L'injection de la matière dans les moules **106** est alors commandée, par rotation du boisseau **162** vers sa position d'injection, déplacement du plongeur **150** vers sa position avancée (figures 32, 33) et déplacement solidaire du piston **42** de l'injecteur **41** vers sa position d'injection. La matière pénètre dans chaque moule **106** par le trou **39** libéré par le déplacement de l'aguille **43** solidaire du piston **42.** Parallèlement, le dispositif **92** de dévêtissement est actionné, le pion **104** étant déplacé vers sa position basse, ce qui, par appui du pion **104** sur le doigt **98,** déplace l'extracteur **93** vers sa position basse pour désolidariser les préformes **2** de leurs noyaux **64B** respectifs. L'extracteur **93** vient s'appliquer contre le patin **138** et entraîne, par appui contre celui-ci, le support **115** vers sa position basse (cf. figure 21). La descente du support **115** provoque la sortie des galets **131** des sections **130** rétrécies des chemins **128** de came latéraux et, sous l'action du ressort **127** de rappel, la translation des peignes **119, 121** sur la traverse **118** vers leur position de préhension, où chaque préforme **2** est retenue par une pince **123** formée par deux mâchoires **120, 122** ainsi mutuellement rapprochées.

Dans le même temps, le suiveur **135** de came du support **115** est libre vis-à-vis du chemin **132** de chemin de came inférieur - autorisant ainsi un mouvement vertical rapide du support **115 -** et les galets **144** parcourent les sections **141** inférieures obliques des guides **139** en contribuant, sous l'action du ressort **145,** à soutenir le support **115** en évitant sa chute libre, comme déjà évoqué ci-dessus.

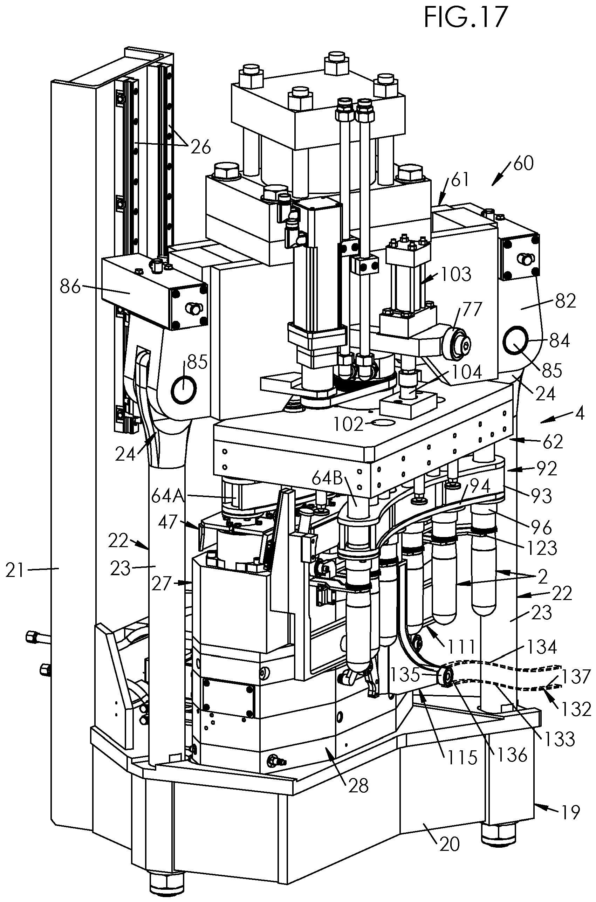

Comme cela est visible sur les figures 17, 22 et 24, le support **115** n'est pas nécessairement déplacé immédiatement jusqu'à sa position basse, mais jusqu'à une position intermédiaire dans laquelle les galets **144** coopèrent avec les encoches **140C** intermédiaires. Le maintien temporaire (le long d'une portion angulaire de la course de l'unité **4** de moulage) dans cette position intermédiaire permet de stabiliser les préformes **2** sur les pinces **123** et ainsi d'éviter toute chute ou, à tout le moins, tout mauvais positionnement d'une préforme **2** sur sa pince **123.**

Après que l'injection des préformes **2** dans les moules **106** est terminée, et éventuellement après une temporisation permettant à la matière de refroidir quelque peu pour éviter toute malformation des préformes **2,** l'équipage mobile peut remonter vers sa position de démoulage. Le piston **42** de l'injecteur **41** est replacé dans sa position d'obturation, dans laquelle l'aiguille **43** obture le trou **39** dans la cavité **32.**

Les verrous **81** sont replacés dans leur position de déverrouillage, ce qui permet la désolidarisation des chapes **82** des colonnes **22.** Le suiveur **77** de came du chariot **61** parcourt une portion **173** ascendante du chemin **76** de came supérieur, ce qui déplace le chariot **61** (et donc l'ensemble de l'équipage **60** mobile) vers la position de démoulage. Les préformes **2** à peine formées sont démoulées ; le refroidissement de la matière provoque la rétraction de la matière et l'adhérence de chaque préforme **2** sur son noyau (en l'occurrence un noyau **64A** primaire). La butée **108** du dispositif **107** d'étayage est replacée dans sa position inactive. Sous l'action des ressorts **59** de rappel, les tiroirs **47** retrouvent leur position de démoulage, les moules **106** se trouvant ainsi dissociés. Le pion **104** du dispositif de dévêtissement est replacé par le vérin **103** dans sa position haute, ce qui, par l'action des ressorts **100** de rappel, permet à l'extracteur **93** du côté extérieur de retrouver sa position de repos. Parallèlement, le support **115** reprend sa descente, sous l'action du suiveur **135** de came parcourant une portion descendante du chemin **132** de came inférieur, ce qui provoque d'abord la sortie des galets **144** des encoches **140C** intermédiaires, puis le déplacement du support **115** jusqu'à sa position basse, dans laquelle les galets **144** viennent coopérer avec les encoches **140B** supérieures (figures 25 et 26). Plus précisément, la fin de la course du support **115** dans son mouvement descendant est assurée par le brin **133** inférieur et le brin **134** supérieur entre lesquels le galet **135** est astreint à se déplacer (figure 17). Le galet **135,** entré dans le chemin **132** de came par la portion **136** haute de celle-ci, est déplacé vers la portion **137** basse, ce qui entraîne le support **115** vers sa position basse. Les galets **144** parcourent pendant ce temps les sections **142** droites du guide **139** et, en l'absence de composante verticale (résistante) d'effort, ne s'opposent donc pas à ce mouvement descendant du support **115.**

Les noyaux **64B** secondaires sont ainsi complètement dévêtus de leurs préformes **2** respectives, lesquelles demeurent accrochées aux pinces **123** jusqu'à en être décrochées par un dispositif **174** de transfert, tel qu'une roue (illustrée en trait mixte épais sur les figures 25 et 26). Le transfert est facilité lorsque cette roue **174** présente un rayon de courbure identique au rayon de l'arc de cercle le long duquel sont agencées les pinces **123.** Le décrochement s'effectue par simple traction sur les préformes **2,** les mâchoires **120, 122** s'écartant élastiquement à l'encontre du ressort **127** de rappel.

La rotation d'un demi-tour du porte-noyaux **62** autour de l'arbre **63** central est alors commandée. A cet effet, l'arbre **72** du moteur **71** est entraîné en rotation, ce qui, via le pignon **73,** la courroie **74** et la couronne **69** dentée, provoque la rotation du porte-noyaux **32.** La course angulaire de l'arbre **72** est prédéterminée ; elle dépend du rapport des diamètres du pignon **73** et de la couronne **69** dentée. Dans l'exemple illustré, où ce rapport est de ½, la rotation d'un demi-tour de la couronne **69** est réalisée par rotation d'un tour complet du pignon **73.** Cette rotation provoque la permutation des noyaux **64A** primaires et des noyaux **64B** secondaires (figure 27). Avant (ou, de préférence, pendant) cette rotation, le boisseau **162** du dispositif **14** d'injection dosimétrique est replacé dans sa position de charge, ce qui provoque la préparation d'une nouvelle dose de matière. Parallèlement, le support **115** retrouve sa position haute par mouvement ascendant du galet **135** en coopération avec une portion ascendante du chemin **132** de came inférieur.

La dénomination « primaire » et « secondaire » étant purement arbitraire, la configuration dans laquelle se trouve alors l'unité de moulage, illustrée sur la figure 27, est similaire à la configuration initiale illustrée sur la figure 2. Le cycle d'injection qui vient d'être décrit peut alors reprendre.

L'unité **4** de moulage décrite ci-dessus procure plusieurs avantages.

Premièrement, nous avons vu qu'un même corps **29** de moule est commun à deux noyaux **64A, 64B** (respectivement primaire et secondaire), une demi-révolution du porte-noyaux **62** permettant de les permuter pour reconstituer immédiatement un moule **106** d'injection pendant l'extraction de la préforme **2** qui vient d'être injectée. L'architecture de l'unité **4** de moulage permet donc de mutualiser une partie de l'équipement (en l'espèce les corps **29** de moules), au bénéfice de la productivité puisque, sur un cycle complet de moulage, un même corps **29** de moule est utilisé deux fois. Il en va de même des tiroirs **47,** qui, intégrés au porte-moule **27** en étant portés par le bloc **28** porte-moule, sont mutualisés puisqu'étant communs à l'ensemble des rangées de noyaux **64A, 64B.** Il en résulte notamment un allégement sensible des masses mobiles.

Deuxièmement, la mutualisation de l'équipement permet, à production égale, de limiter le nombre de pièces et l'encombrement de l'unité **4** de moulage. On notera que la diminution de la masse de l'unité **4** de moulage réduit proportionnellement son inertie, ce qui permet d'augmenter la vitesse de rotation du carrousel **3** et donc d'augmenter les cadences de production. De ce fait, les préformes **2** produites peuvent directement être introduites dans un cycle de fabrication des récipients. En d'autres termes, la machine **1** de moulage peut être directement intégrée à une ligne de production de récipients, sans stockage intermédiaire des préformes formées. Il en résulte notamment une amélioration du rendement énergétique d'une telle ligne de production, puisque la température des préformes **2** issues de la machine **1** est déjà très supérieure à la température ambiante, le conditionnement thermique réalisé dans l'unité de chauffe se limitant à une élévation de la température de préformes **2** de vingt à trente degrés environ (contrairement à une ligne de production classique dans laquelle les préformes préalablement injectées et stockées pendant une durée indéterminée - généralement de plusieurs jours - sont déversées en vrac dans une trémie d'où elles sont extraites puis mises en rang avant de subir un conditionnement thermique consistant en une élévation de leur température d'une centaine de degrés).

Troisièmement, la mutualisation des corps **29** de moule induit une réduction du nombre de conduits **13** d'alimentation, ce qui permet de simplifier l'architecture du joint tournant et d'en faciliter la maintenance.

On notera que, bien que l'utilisation décrite de la machine **1** corresponde à un moulage des préformes **2** par injection, cette machine **1** permet également de réaliser un moulage des préformes **2** par injection-compression.

Dans cette deuxième utilisation, le chariot **61** est temporairement immobilisé dans une position intermédiaire, légèrement surélevée par rapport à la position basse, et dans laquelle le noyau **64A** ou **64B** est partiellement logé dans le corps **29** de moule. L'injection de la matière plastique est alors commandée dans cette position intermédiaire du chariot **61,** puis celui-ci est déplacé vers sa position basse pour comprimer la matière ainsi injectée. Il en résulte notamment une meilleure prise d'empreinte des préformes **2,** au bénéfice de la qualité finale des récipients.

## Revendications

1. Unité (**4**) de moulage de préformes (**2**) en matière plastique, chaque préforme (**2**) ayant un corps (**15**) et un col (**17**) dans le prolongement du corps (**15**), cette unité (**4**) comprenant :
- un bâti (**19**),
- un porte-moule (**27**) solidaire du bâti (**19**) et portant au moins un corps (**29**) de moule à l'empreinte d'une face (**33**) externe du corps (**15**) de la préforme (**2**), ce corps (**29**) de moule s'étendant autour d'un axe (**M**) de moulage ;
- un équipage (**60**) mobile incluant un chariot (**61**) et au moins un noyau (**64A, 64B**) oblong à l'empreinte d'une face (**65**) interne du corps (**15**) de la préforme (**2**), le chariot (**61**) étant monté déplaçable par rapport au bâti (**19**) entre :
o une position de moulage dans laquelle le noyau (**64A**, **64B**) est logé dans le corps (**29**) de moule, et
o une position de démoulage dans laquelle le noyau (**64A, 64B**) est écarté axialement du corps (**29**) de moule,
cette unité (**4**) de moulage étant **caractérisée en ce que** l'équipage (**60**) mobile comprend en outre :
- un porte-noyaux (**62**) monté sur le chariot (**61**), ce porte-noyaux (**62**) portant au moins un noyau (**64A**) primaire et un noyau (**64B**) secondaire et étant mobile en rotation par rapport au chariot (**61**), en position de démoulage de celui-ci, autour d'un axe (**R**) de rotation parallèle à l'axe (**M**) de moulage, entre :
∘ une première position d'alignement dans laquelle le noyau (**64A**) primaire s'étend dans l'alignement du corps (**29**) de moule tandis que le noyau (**64B**) secondaire est désaxé par rapport au corps (**29**) de moule, et
∘ une deuxième position d'alignement dans laquelle le noyau (**64A**) primaire et le noyau (**64B**) secondaire sont permutés.

2. Unité (**4**) de moulage selon la revendication 1, **caractérisée en ce qu'**elle comprend un dispositif (**107**) d'étayage incluant une butée (**108**) montée mobile entre une position active dans laquelle la butée (**108**) est en appui contre le porte-noyaux (**62**) à l'aplomb du porte-moule (**27**), et une position inactive dans laquelle la butée (**108**) est écartée du porte-noyaux (**62**).

3. Unité (**4**) de moulage selon la revendication 1 ou la revendication 2, **caractérisée en ce que** le chariot (**61**) est monté en translation par rapport au bâti (**19**).

4. Unité (**4**) de moulage selon l'une des revendications précédentes, **caractérisé en ce que** le porte-moule (**27**) inclut une pluralité de corps (**29**) de moules, et le porte-noyaux (**62**) porte une pluralité de noyaux (**64A**) primaires et une pluralité de noyaux (**64B**) secondaires.

5. Unité (**4**) de moulage selon la revendication 4, **caractérisé en ce que** le porte-moule (**27**) porte une rangée de corps (**29**) de moules.

6. Unité (**4**) de moulage selon la revendication 5, **caractérisé en ce que** les corps (**29**) de moules sont disposés côte à côte le long d'une ligne courbe.

7. Unité (**4**) de moulage selon l'une des revendications précédentes, **caractérisée en ce qu'**elle comprend une paire de tiroirs (**47**) portant chacun au moins une demi-bague (**48**) de col ayant une face (**49**) interne à l'empreinte du col (**17**) d'une préforme (**2**) et une face (**50**) externe tronconique, chaque tiroir (**47**) étant mobile par rapport au porte-moule (**27**) entre une position de moulage dans laquelle la ou chaque demi-bague (**48**) est logée dans une réserve (**35**) tronconique formée en saillie sur le corps (**29**) de moule, et une position de démoulage dans laquelle la ou chaque demi-bague (**48**) est écartée de la réserve (**35**) tronconique.

8. Unité (**4**) de moulage selon la revendication 7, **caractérisée en ce que** chaque tiroir (**47**) est monté en translation par rapport au porte-moule (**27**) sur un axe (**G**) de guidage incliné par rapport à l'axe (**M**) de moulage.

9. Unité (**4**) de moulage selon la revendication 8, **caractérisée en ce qu'**elle comprend, pour chaque tiroir (**47**), un ressort (**59**) de rappel monté parallèlement à l'axe (**G**) de guidage et qui sollicite le tiroir (**47**) vers sa position de démoulage, **en ce que** chaque tiroir (**47**) porte un galet (**53**), et le porte-noyaux (**62**) porte un élément (**90**) d'appui qui, lors du déplacement du porte-noyaux (**62**) vers sa position de moulage, vient, par application contre le galet (**53**), repousser le tiroir (**47**) vers sa position de moulage à l'encontre du ressort (**59**) de rappel.

10. Unité (**4**) de moulage selon l'une des revendications 7 à 9, **caractérisée en ce qu'**elle comprend un dispositif (**92**) de dévêtissement de chaque préforme (**2**) moulée, en position de démoulage du porte-noyaux (**62**).

11. Unité (**4**) de moulage selon la revendication 10, **caractérisée en ce que** le dispositif (**92**) de dévêtissement comprend :
- un extracteur (**93**) muni d'un poussoir (**96**) monté en translation sur chaque noyau (**64A, 64B**), cet extracteur (**93**) étant mobile en translation par rapport à chaque noyau (**64A, 64B**) entre une position de repos et une position d'extraction,
- un pion (**104**) monté en translation par rapport au porte-noyaux (**62**), entre une position de repos dans laquelle le pion (**104**) est écarté de l'extracteur (**93**) et permet à celui-ci d'adopter sa position de repos, et une position d'extraction dans laquelle le pion (**104**) est en appui contre l'extracteur (**93**) et place celui-ci dans sa position d'extraction pour désolidariser la préforme (**2**) moulée du noyau (**64A**, **64B**).

12. Unité (**4**) de moulage selon la revendication 10 ou la revendication 11, **caractérisé en ce qu'**elle comprend un dispositif (**111**) de préhension des préformes (**2**) moulées extraites du porte-noyaux (**62**), ce dispositif (**111**) de préhension comprenant un premier peigne (**119**) portant au moins une première mâchoire (**120**) et un deuxième peigne (**121**) portant au moins une deuxième mâchoire (**122**) définissant, avec la première mâchoire (**120**), une pince (**123**) de préhension d'une préforme (**2**), les peignes (**119**, **121)** étant montés mobiles l'un par rapport à l'autre entre une position de préhension dans laquelle les mâchoires (**120, 122**) sont rapprochées, et une position de libération dans laquelle les mâchoires (**120, 122**) sont écartées.

13. Unité (**4**) de moulage selon la revendication 12, **caractérisée en ce que** le dispositif (**111**) de préhension comprend un ressort (**127**) de rappel qui sollicite les peignes (**119, 121**) vers la position de préhension, le porte-moule (**27**) porte une paire de chemins (**128**) de cames, et chaque peigne (**119**, **121**) porte un suiveur (**131**) de came qui coopère avec un chemin (**128**) de came dont une section (**130**) rétrécie place les peignes (**119**, **121**) dans leur position de libération à l'encontre du ressort (**127**) de rappel.

14. Machine (**1**) de moulage de préformes en matière plastique, qui comprend :
- un carrousel (**3**) tournant,
- une pluralité d'unités (**4**) de moulage selon l'une des revendications précédentes, montées sur le carrousel (**3**),
- une extrudeuse (**5**),
- un joint (**11**) tournant muni d'une entrée (**10**) reliée à l'extrudeuse (**5**), et d'une pluralité de sorties (**12**) reliées chacune à une unité (**4**) de moulage par un conduit (**13**) d'alimentation pour y délivrer la matière plastique.

15. Machine (**1**) selon la revendication 14, qui comprend en outre un dispositif (**14**) d'injection dosimétrique de la matière en provenance de l'extrudeuse (**5**), ce dispositif (**14**) d'injection dosimétrique comprenant une vanne (**146**) à trois voies interposée sur le conduit (**13**) d'alimentation, un cylindre (**148**) de dosage, un plongeur (**150**) monté en translation dans le cylindre (**148**) de dosage, un vérin (**153**) de commande de la translation du plongeur (**150**), et un vérin (**165**) de commande de la position de la vanne (**146**).

## Patentansprüche

1. Einheit (4) zum Formen von Preformen (2) aus Kunststoff, wobei jede Preform (2) einen Körper (15) und einen Hals (17) in der Verlängerung des Körpers (15) aufweist, wobei diese Einheit (4) umfasst:
- ein Gestell (19),
- einen Formträger (27), der mit dem Gestell (19) fest verbunden ist und wenigstens einen Formkörper (29) mit dem Formabdruck einer Außenseite (33) des Körpers (15) der Preform (2) trägt, wobei sich dieser Formkörper (29) um eine Formachse (M) herum erstreckt;
- einen beweglichen Teil (60), der einen Schlitten (61) und wenigstens einen länglichen Kern (64A, 64B) mit dem Formabdruck einer Innenseite (65) des Körpers (15) der Preform (2) aufweist, wobei der Schlitten (61) bezüglich des Gestells (19) verschiebbar angeordnet ist zwischen:
o einer Formposition, in welcher der Kern (64A, 64B) in dem Formkörper (29) aufgenommen ist, und
o einer Entformposition, in welcher der Kern (64A, 64B) axial von dem Formkörper (29) entfernt ist,
wobei diese Formeinheit (4) **dadurch gekennzeichnet ist, dass** der bewegliche Teil (60) außerdem umfasst:
- einen Kernträger (62), der auf dem Schlitten (61) angebracht ist, wobei dieser Kernträger (62) wenigstens einen primären Kern (64A) und einen sekundären Kern (64B) trägt und bezüglich des Schlittens (61), in der Entformposition desselben, um eine zur Formachse (M) parallele Drehachse (R) drehbeweglich ist zwischen:
o einer ersten Ausrichtungsposition, in welcher sich der primäre Kern (64A) mit dem Formkörper (29) fluchtend erstreckt, während der sekundäre Kern (64B) bezüglich des Formkörpers (29) axial verschoben ist, und
o einer zweiten Ausrichtungsposition, in welcher der primäre Kern (64A) und der sekundäre Kern (64B) vertauscht sind.

2. Formeinheit (4) nach Anspruch 1, **dadurch gekennzeichnet, dass** sie eine Abstützeinrichtung (107) umfasst, die einen Anschlag (108) aufweist, der zwischen einer aktiven Position, in welcher der Anschlag (108) an dem Kernträger (62) im Lot mit dem Formträger (27) anliegt, und einer inaktiven Position, in welcher der Anschlag (108) von dem Kernträger (62) entfernt ist, beweglich angebracht ist.

3. Formeinheit (4) nach Anspruch 1 oder Anspruch 2, **dadurch gekennzeichnet, dass** der Schlitten (61) translatorisch beweglich bezüglich des Gestells (19) angebracht ist.

4. Formeinheit (4) nach einem der vorhergehenden Ansprüche, **dadurch gekennzeichnet, dass** der Formträger (27) mehrere Formkörper (29) aufweist und der Kernträger (62) mehrere primäre Kerne (64A) und mehrere sekundäre Kerne (64B) aufweist.

5. Formeinheit (4) nach Anspruch 4, **dadurch gekennzeichnet, dass** der Formträger (27) eine Reihe von Formkörpern (29) trägt.

6. Formeinheit (4) nach Anspruch 5, **dadurch gekennzeichnet, dass** die Formkörper (29) entlang einer gekrümmten Linie nebeneinander angeordnet sind.

7. Formeinheit (4) nach einem der vorhergehenden Ansprüche, **dadurch gekennzeichnet, dass** sie ein Paar von Schiebern (47) umfasst, die jeweils wenigstens eine Hals-Hülsenhälfte (48) mit einer Innenseite (49) mit dem Formabdruck des Halses (17) einer Vorform (2) und einer kegelstumpfförmigen Außenseite (50) tragen, wobei jeder Schieber (47) bezüglich des Formträgers (27) zwischen einer Formposition, in welcher die oder jede Hülsenhälfte (48) in einer auf dem Formkörper (29) vorstehend ausgebildeten kegelstumpfförmigen Lagerhülse (35) aufgenommen ist, und einer Entformposition, in welcher die oder jede Hülsenhälfte (48) von der kegelstumpfförmigen Lagerhülse (35) entfernt ist, beweglich ist.

8. Formeinheit (4) nach Anspruch 7, **dadurch gekennzeichnet, dass** jeder Schieber (47) bezüglich des Formträgers (27) translatorisch beweglich auf einer bezüglich der Formachse (M) geneigten Führungsachse (G) angebracht ist.

9. Formeinheit (4) nach Anspruch 8, **dadurch gekennzeichnet, dass** sie für jeden Schieber (47) eine Rückholfeder (59) umfasst, die parallel zur Führungsachse (G) angebracht ist und die den Schieber (47) in Richtung seiner Entformposition beaufschlagt, dadurch, dass jeder Schieber (47) eine Rolle (53) trägt und der Kernträger (62) ein Stützelement (90) trägt, welches bei der Verschiebung des Kernträgers (62) in Richtung seiner Formposition durch Angriff an der Rolle (53) den Schieber (47) entgegen der Kraft der Rückholfeder (59) in Richtung seiner Formposition zurückdrückt.

10. Formeinheit (4) nach einem der Ansprüche 7 bis 9, **dadurch gekennzeichnet, dass** sie eine Vorrichtung (92) zum Abstreifen jeder geformten Preform (2) in der Entformposition des Kernträgers (62) umfasst.

11. Formeinheit (4) nach Anspruch 10, **dadurch gekennzeichnet, dass** die Vorrichtung (92) zum Abstreifen umfasst:
- einen mit einem Stößel (96) versehenen Abzieher (93), der translatorisch beweglich an jedem Kern (64A, 64B) angebracht ist, wobei dieser Abzieher (93) translatorisch beweglich bezüglich jedes Kerns (64A, 64B) zwischen einer Ruheposition und einer Abzugsposition ist,
- einen Zapfen (104), der bezüglich der Kernträgers (62) translatorisch beweglich zwischen einer Ruheposition, in welcher der Zapfen (104) von dem Abzieher (93) entfernt ist und diesem ermöglicht, seine Ruheposition einzunehmen, und einer Abzugsposition, in welcher der Zapfen (104) an dem Abzieher (93) anliegt und diesen in seine Abzugsposition bringt, um die geformte Preform (2) von dem Kern (64A, 64B) zu lösen, angebracht ist.

12. Formeinheit (4) nach Anspruch 10 oder Anspruch 11, **dadurch gekennzeichnet, dass** sie eine Vorrichtung (111) zum Greifen der von dem Kernträger (62) abgezogenen geformten Preformen (2) umfasst, wobei diese Vorrichtung (111) zum Greifen einen ersten Kamm (119), der wenigstens eine erste Klemmbacke (120) trägt, und einen zweiten Kamm (121), der wenigstens eine zweite Klemmbacke (122) trägt, die mit der ersten Klemmbacke (120) eine Zange (123) zum Greifen einer Preform (2) definiert, umfasst, wobei die Kämme (119, 121) relativ zueinander beweglich sind zwischen einer Greifposition, in welcher die Klemmbacken (120, 122) aneinander angenähert sind, und einer Freigabeposition, in welcher die Klemmbacken (120, 122) voneinander entfernt sind.

13. Formeinheit (4) nach Anspruch 12, **dadurch gekennzeichnet, dass** die Vorrichtung (111) zum Greifen eine Rückholfeder (127) umfasst, welche die Kämme (119, 121) in Richtung der Greifposition beaufschlagt, wobei der Formträger (27) ein Paar Nockenbahnen (128) trägt und jeder Kamm (119, 121) einen Nockenstößel (131) trägt, der mit einer Nockenbahn (128) zusammenwirkt, von der ein verengter Abschnitt (130) die Kämme (119, 121) entgegen der Kraft der Rückholfeder (127) in ihre Freigabeposition bringt.

14. Maschine (1) zum Formen von Preformen aus Kunststoff, welche umfasst:
- ein rotierendes Karussell (3),
- mehrere Formeinheiten (4) nach einem der vorhergehenden Ansprüche, die auf dem Karussell (3) angebracht sind,
- einen Extruder (5),
- eine Drehverbindung (11), die mit einem mit dem Extruder (5) verbundenen Eingang (10) versehen ist, und mit mehreren Ausgängen (12), die jeweils über eine Speiseleitung (13) mit einer Formeinheit (4) verbunden sind, um dieser den Kunststoff zuzuführen.

15. Maschine (1) nach Anspruch 14, welche außerdem eine Vorrichtung (14) zum dosimetrischen Spritzen des vom Extruder (5) stammenden Materials umfasst, wobei diese Vorrichtung (14) zum dosimetrischen Spritzen ein Dreiwegeventil (146), das in der Speiseleitung (13) zwischengeschaltet ist, einen Dosierzylinder (148), einen Tauchkolben (150), der translatorisch beweglich in dem Dosierzylinder (148) angebracht ist, einen Zylinder (153) zur Steuerung der Translation des Tauchkolbens (150) und einen Zylinder (165) zur Steuerung der Position des Ventils (146) umfasst.

## Claims

1. Unit (4) for moulding plastic preforms (2), each preform (2) having a body (15) and a neck (17) in the continuation of the body (15), this unit (4) comprising:
- a framework (19),
- a mould holder (27) secured to the framework (19) and bearing at least one mould body (29) with the impression of an external face (33) of the body (15) of the preform (2), this mould body (29) extending around a moulding axis (M);
- mobile gear (60) including a carriage (61) and at least one oblong core (64A, 64B) in the impression of an internal face (65) of the body (15) of the preform (2), the carriage (61) being mounted with the ability to be moved with respect to the framework (19) between:
o a moulding position in which the core (64A, 64B) is housed in the mould body (29), and
o a demoulding position in which the core (64A, 64B) is axially separated from the mould body (29),
this moulding unit (4) being **characterized in that** the mobile gear (60) further comprises:
- a core holder (62) mounted on the carriage (61), this core holder (62) bearing at least one primary core (64A) and one secondary core (64B) and being able to move in rotation with respect to the carriage (61), in the demoulding position thereof, about an axis (R) of rotation parallel to the moulding axis (M), between:
o a first alignment position in which the primary core (64A) is in alignment with the mould body (29) while the secondary core (64B) is off-axis with respect to the mould body (29), and
o a second alignment position in which the primary core (64A) and the secondary core (64B) are switched.

2. Moulding unit (4) according to Claim 1, **characterized in that** it comprises a bracing device (107) including an end stop (108) mounted with the ability to move between an active position in which the end stop (108) presses against the core holder (62) in line with the mould holder (27), and an inactive position in which the end stop (108) is separated from the core holder (62).

3. Moulding unit (4) according to Claim 1 or Claim 2, **characterized in that** the carriage (61) is mounted for translational movement with respect to the framework (19).

4. Moulding unit (4) according to one of the preceding claims, **characterized in that** the mould holder (27) includes a plurality of mould bodies (29) and the core holder (62) bears a plurality of primary cores (64A) and a plurality of secondary cores (64B).

5. Moulding unit (4) according to Claim 4, **characterized in that** the mould holder (27) bears a row of mould bodies (29).

6. Moulding unit (4) according to Claim 5, **characterized in that** the mould bodies (29) are arranged side by side in a curved line.

7. Moulding unit (4) according to one of the preceding claims, **characterized in that** it comprises a pair of slides (47) each bearing at least one neck half-ring (48) having an internal face (49) in the impression of the neck (17) of a preform (2) and a frustoconical external face (50), each slide (47) being able to move with respect to the mould holder (27) between a moulding position in which the or each half-ring (48) is housed in a frustoconical reserve (35) formed as a projection on the mould body (29), and a demoulding position in which the or each half-ring (48) is separated from the frustoconical reserve (35).

8. Moulding unit (4) according to Claim 7, **characterized in that** each slide (47) is mounted for translational movement with respect to mould holder (27) along a guide axis (G) that is inclined with respect to the moulding axis (M).

9. Moulding unit (4) according to Claim 8, **characterized in that** it comprises, for each slide (47), a return spring (59) mounted parallel to the guide axis (G) and which urges the slide (47) towards its demoulding position, **in that** each slide (47) bears a roller (53) and the core holder (62) bears a bearing element (90) which, as the core holder (62) moves towards its moulding position, by pressing against the roller (53) pushes the slide (47) back towards its moulding position against action of the return spring (59).

10. Moulding unit (4) according to one of Claims 7 to 9, **characterized in that** it comprises a stripping device (92) for stripping each moulded preform (2) when the core holder (62) is in the demoulding position.

11. Moulding unit (4) according to Claim 10, **characterized in that** the stripping device (92) comprises:
- an extractor (93) provided with a push rod (96) mounted for translational movement on each core (64A, 64B), this extractor (93) being able to move translationally with respect to each core (64A, 64B) between a rest position and an extraction position,
- a pin (104) mounted for translational movement with respect to the core holder (62), between a rest position in which the pin (104) is separated from the extractor (93) and allows the latter to adopt its rest position, and an extraction position in which the pin (104) bears against the extractor (93) and places the latter in its extraction position in order to detach the moulded preform (2) from the core (64A, 64B).

12. Moulding unit (4) according to Claim 10 or Claim 11, **characterized in that** it comprises a gripper device (111) for grasping the moulded preforms (2) extracted from the core holder (62) this gripper device (111) comprising a first comb (119) bearing at least one first jaw (120) and a second comb (121) bearing at least one second jaw (122) which, with the first jaw (120) defines a gripper (123) for grasping a preform (2), the combs (119, 121) being mounted with the ability to move relative to one another between a grasping position in which the jaws (120, 122) are closer together and a release position in which the jaws (120, 122) are separated.

13. Moulding unit (4) according to Claim 12, **characterized in that** the gripper device (111) comprises a return spring (127) which urges the combs (119, 121) towards the grasping position, the mould holder (27) bears a pair of camways (128) and each comb (119, 121) bears a cam follower (131) which collaborates with a camway (128) of which a narrower section (130) places the combs (119, 121) in their release position, against the action of the return spring (127).

14. Machine (1) for moulding plastic preforms, which comprises:
- a rotary carousel (3),
- a plurality of moulding units (4) according to one of the preceding claims, mounted on the carousel (3),
- an extruder (5),
- a rotary joint (11) provided with an inlet (10) connected to the extruder (5) and with a plurality of outlets (12) each connected to a moulding unit (4) by a feed duct (13) in order to deliver the plastic thereto.

15. Machine (1) according to Claim 14, which further comprises a metered-injection device (14) for the metered injection of material coming from the extruder (5), this metered-injection device (14) comprising a three-way valve (146) interposed on the feed duct (13), a metering cylinder (148), a plunger (150) mounted for translational movement in the metering cylinder (148), a ram (153) for controlling the translational movement of the plunger (150) and a ram (165) for controlling the position of the valve (146).
